# EUROPEAN PATENT APPLICATION

(11) **EP 1 703 095 A1**
(43) Date of publication of application: **20.09.2006**
(21) Application number: 04807640.0
(22) Date of filing: 16.12.2004
(51) Int. Cl.: F01N 3/02, B01D 39/20, B01D 46/42

(54) **EXHAUST GAS PURIFYING DEVICE AND METHOD FOR RECOVERING EXHAUST GAS PURIFYING DEVICE**

(30) Priority: 25.12.2003 JP 2003430494
(71) Applicant: IBIDEN CO., LTD., Ogaki-shi, Gifu-ken 503-0917 (JP)
(72) Inventor: YOSHIDA, Yutaka, Ibi-gun, Gifu 5010601 (JP)
(74) Representative: Uchida, Kenji
(86) International application number: PCT/JP2004/019283
(87) International publication number: WO 2005/064128

(57) **Abstract**

An exhaust gas purifying apparatus is provided which includes a honeycomb structure used as a filter to capture particulates in exhaust gas from an internal combustion engine such as diesel engine and as a carrier of a catalyst to convert the exhaust gas. The honeycomb structure is formed from a composite material comprising ceramic particles and crystalline silicon. The particulates captured by the honeycomb structure are removed by combustion at a temperature of 250 to 800 °C, thereby, even if a relatively low temperature is distributed or a heat cycle has been repeated from a long term, thermal stress is prevented from being stored, cracking is prevented and thermal shock resistance is thus improved.

## Description

### Field of the Invention

The present invention relates to an exhaust gas purifying apparatus using a honeycomb structure as a filter to capture particulates in exhaust gas from an internal combustion engine such as a diesel engine or as a support of a catalyst to convert the exhaust gas, and a method of regenerating the exhaust gas purifying apparatus by removing, by burning, the particulates etc. captured by the honeycomb structure.

### Background Art

Recently, it has been pointed out that the particulates in exhaust gas from an internal combustion engine on board in a vehicle such as a bus, truck or the like and a construction machine are harmful to the environment and human body.

It has been proposed to use an exhaust gas purifying apparatus using porous ceramics, namely, a ceramic filter, as a device to capture and remove particulates in exhaust gas.

As a typical ceramic filter, there is well known, for example, a ceramic honeycomb filter including a plurality of cells (which are through-holes) disposed side by side in one direction, and partitions (cell walls) formed between the cells and each having a filtering function.

More specifically, in the ceramic honeycomb filter, the cells are sealed at either an exhaust gas inlet or outlet end thereof with a sealing member so that the sealed ends and not-sealed ends of the cells will form together a checkered pattern and thus exhaust gas supplied to the inlet end of one cell will flow out from other cells adjacent to the one cell through the cell walls between these cells. Thus, particulates in the exhaust gas will be captured by the cell walls when passing through the latter, thereby providing purified gas.

With repetition of this purification of the exhaust gas, the particulates will gradually be deposited on the cell walls which separate the cells of the ceramic honeycomb filter from each other, finally clog pores in the cell walls and block the gas from passing through the cell walls. To unclog the cell walls, the particulates are removed by periodically burning by a heating means such as a heater. The ceramic honeycomb filter is thus regenerated.

As a ceramic material for use to form such a conventional honeycomb filter, there is well known the ceramic material comprising silicon carbide, cordielite or the like. However, since the ceramic material is heated at a high temperature by hot exhaust gas when particulates are captured as well as by a heating means such as a heater when the filter is regenerated, a honeycomb filter made from a silicon carbide having a higher thermal resistance is considered as advantageous (see the International Application published as WO 01/23069).

Indeed, the honeycomb filter made from the silicon carbide is advantageous in that it has high thermal conductivity, while being not advantageous in that it is easy to crack when thermally shocked.

To solve the above problems, there has been proposed a honeycomb structure in which silicon carbide powder particles are bonded together by metallic silicon by adding metallic silicon and organic binder to the silicon carbide particles, mixing and kneading them together, forming the mixture into a honeycomb shape and baking the honeycomb-shaped mixture (see the Japanese Unexamined Patent Publication No. 2002-201082).

However, in case the honeycomb structure formed from a composite material comprising silicon carbide and metallic silicon is used as a filter in an exhaust gas purifying apparatus, repetition of particulate capture and filter regeneration will lead to gradual increase of pressure loss.

The present invention has an object to overcome the above-mentioned drawbacks of the related art by providing an exhaust gas purifying apparatus using a honeycomb structure having a high coefficient of thermal conductivity and such a high thermal shock resistance that no cracking or no increase of pressure loss will occur even in a distribution of a relatively low temperature or after a heat cycle has been repeated for a long term, and a method of regenerating the honeycomb structure by effectively removing particulates captured by the honeycomb structure.

### Disclosure of the Invention

To solve the above-mentioned problems of the related art, the inventors worked out the following inventions based on their findings that a composite material comprising ceramics and silicon, especially, a porous ceramics comprising ceramic particles and high-crystallinity crystalline silicon, could effectively be used to form a honeycomb structure and that use of such a honeycomb structure as an exhaust gas purifying filter permits to effectively remove particulates captured by the filter by burning at a temperature ranging from 250°C to 800°C.

That is, the above object can be attained by providing:
(1) An exhaust gas purifying apparatus using a honeycomb structure which is to be disposed in an exhaust passage of an internal combustion engine and which functions as a filter to capture particulates in exhaust gas and as a catalyst to convert the exhaust gas, wherein the honeycomb structure is formed from a composite material comprising ceramic particles and crystalline silicon and is to be regenerated by heating at a temperature ranging from 250°C to 800°C.

Also the above object can be attained by providing:
(2) A method of regenerating an exhaust gas purifying apparatus using a honeycomb structure which is to be disposed in an exhaust passage of an internal combustion engine and which functions as a filter to capture particulates in exhaust gas and as a catalyst to convert the exhaust gas, the honeycomb structure being formed from a composite material comprising ceramic particles and crystalline silicon, wherein the exhaust gas purifying apparatus is regenerated by heating the particulates etc. captured by the honeycomb structure at a temperature ranging from 250°C to 800°C by a filter regenerating means including a heating means provided for the apparatus or by the heat of the exhaust gas itself without providing the filter regenerating means.

As will be known, the features of the present invention lie in that the honeycomb structure formed from the composite material comprising ceramic particles and crystalline silicon is used as a filter to capture the particulates in the exhaust gas or as an exhaust gas converting catalyst and the particulates captured by the honeycomb structure are heated at a temperature of 250 to 800 °C to regenerate the exhaust gas purifying apparatus.

The "composite material comprising ceramic particles and crystalline silicon" referred to herein means porous ceramics comprising ceramic particles and crystalline silicon.

By observing a reflected electron image through a scanning electron microscope (SEM), mapping the section of the sintered composite material by the energy dispersive X-ray analysis (EDS) or by any other similar method; it is possible to position the ceramic particles and crystalline silicon. Also, by the X-ray diffraction method, transmission electron microscope (TEM) or electron back-scattered diffraction (EBSD), it is possible to check the crystalline state (crystal orientation and distribution) of each particle.

In the present invention, the composite material used to form the honeycomb structure should preferably be porous ceramics in which ceramic particles are bonded together by crystalline silicon whose crystallinity is high.

It is inferred that the reason of the above is as follows:

Since the crystalline silicon contains less impurities such as Al, Fe, etc. than crystalline silicon rich in impurities and low in crystallinity, the crystalline silicon having the high crystallinity will have a high thermal conductivity and electric conductivity. It is assumed here that a wave of electrons passes through a microscopic alignment of a silicon crystal. In case silicon atoms are regularly arranged in the silicon, even if any interference has been caused between the silicon atoms and the electron wave passing through the silicon crystal, the electron wave will gradually be simplified and become a plane wave. Thus, the high-crystallinity crystalline silicon will be high in thermal and electric conductivity.

In the present invention, the half-width of a silicon peak (2θ = about 28°), observed by the X-ray diffraction (desirably in accordance with the JIS Standard K0131-1996), of the honeycomb structure should preferably be 0.6°.or less.

The inventors of the present invention found the fact that the thermal conductivity of the honeycomb structure formed from the porous ceramics in which the ceramic particles are bonded together by the crystalline silicon greatly depends upon the crystallinity of the silicon, namely, the thermal conductivity of the honeycomb structure formed from the porous ceramics will vary largely depending upon the crystallinity of the crystalline silicon.

More specifically, according to the present invention, the electric resistance and thermal conductivity of the honeycomb structure are very much improved by increasing the crystallinity of the silicon so that the half-width of silicon peak (2θ = about 28°), observed by the X-ray diffraction, of the honeycomb structure will be 0.6° or less. It is considered that as the result, the electric properties of the honeycomb structure will be improved and regeneration of the honeycomb structure be improved by the catalyst. In addition, the thermal diffusion of the honeycomb structure is also improved. Even if a temperature distribution takes place in the honeycomb structure or a heat cycle has been repeated, the honeycomb structure will store less thermal stress and thus have a higher thermal shock resistance.

As well known, such a crystalline silicon can be produced by selecting silicon powder containing less impurities and sintering the silicon powder at a high temperature.

Note that in the conventional honeycomb structures disclosed in the aforementioned Japanese Patent Application Laid Open No. 2002-201082, the half-width of silicon peak (2θ = about 28°), observed by the X-ray diffraction, of the honeycomb structures is more than 0.6° and the crystallinity is somewhat low. Thus, it is considered that because of the low crystallinity of the crystalline silicon, the conventional honeycomb structures have no sufficient thermal conductivity and no sufficient thermal shock resistance as well.

In the present invention, the half-width of silicon peak (2θ = about 28°), observed by the X-ray diffraction, of the honeycomb structure should preferably be 0.1° or more.

It is inferred that the reason of the above is as follows:

If the half-width of silicon peak is less than 0.1°, the crystalline silicon will have a higher crystallinity and the honeycomb structure have a higher electric conductivity than necessary. However, it is believable that in activation of an actual precious-metal catalyst, lowering the electric conductivity to cause a random interference in portions of the catalyst will permit to effectively change the time of activation by the catalyst and changing the direction of activation will permit to effectively activate more portions of the catalyst. Also, it is believable that repeating a heat cycle many times in the honeycomb structure will cause micro cracks in the boundary between the ceramic particles and crystalline silicon and the cracks will lead to a large crack soon after.

According to the present invention, the honeycomb structure may be formed by arranging a plurality of cells longitudinally with a cell wall being laid between adjacent ones of the cells and binding together a plurality of pillar-shaped porous honeycomb ceramic members in each of which the cells are sealed at one end thereof with a sealing layer laid between adjacent ones of the ceramic members (this honeycomb structure will be referred to as "aggregate honeycomb structure" hereunder wherever appropriate) or the honeycomb structure may be formed from a ceramic member formed in its entirety as one ceramic block (this honeycomb structure will be referred to as "integral honeycomb structure" hereunder wherever appropriate).

The honeycomb structure of the aggregate type includes a plurality of pillar-shaped porous honeycomb ceramic members, bound together and each formed from a plurality of cells each providing a gas passage and cell walls for isolating the cells from each other, the cells being sealed at one end thereof, and sealing layers for sealing the outer surfaces of the ceramic members and bonding the ceramic members to each other. In the honeycomb structure of the integral type, each of the pillar-shaped porous honeycomb ceramic members is formed to have a circular, elliptic or polygonal cross section.

According to the present invention, the pillar-shaped porous honeycomb ceramic member, that is, the ceramic block, should preferably have a plurality of cells sealed at one end thereof with a sealing material while having the remainder of the cells, not sealed at the one end, sealed at the other end with the sealing material.

That is to say, since a cell wall having a wider surface area can capture a thinner layer of particulates, exhaust gas can be allowed to pass by with less resistance and the pressure loss can be reduced.

Also according to the present invention, the honeycomb structure may be formed from a pillar-shaped porous honeycomb ceramic member including a plurality of cells, each providing a gas passage, arranged side by side longitudinally with cell walls being laid between adjacent ones of the cells, and which has a catalyst made from a precious metal such as Pt, Rh, Pd or the like or their alloy supported on the surface of each cell wall (as a catalyst carrier), or it may be formed by binding together a plurality of such pillar-shaped porous honeycomb ceramic members in combination.

It is inferred that the reason of the above is as follows:

Generally, ceramics include two types: covalent and ionic. It is already known that in any of them, almost no electric charges will be transferred. On the contrary, in the crystalline silicon, the charges will be transferred more freely as in a metal than in the ceramics. Therefore, when crystalline silicon and precious metal (Pt, Rh, Pd or the like) exist adjacently to each other, the charges will be transferred more smoothly from the crystalline silicon to the precious metal and thus the latter will be charged more than a catalyst carrier formed from a stand-alone normal ceramics, so that gas or the like can be activated more easily. The "activation of gas or the like" refers to oxidation of NO in exhaust gas into NO₂ having a high oxidative power, that is, a gaseous activating agent. It is believed that the nitrogen dioxide (NO₂) as a gaseous activating agent is highly active to promote the oxidation of particulates.

Also, since activation of oxygen can be promoted by contact of the precious metal with oxygen, charge transfer, highly oxidative NO₂ gas, etc., the activated oxygen oxidizes particulates more easily than oxygen not so activated, resulting in promotion of the oxidation of the particulates.

Therefore, with a catalyst made from a precious metal or its alloy being supported on the honeycomb structure formed from a composite material comprising ceramic particles and crystalline silicon, more charges will be transferred from the crystalline silicon to the precious metal to promote the activation of exhaust gas, and this activation promotes the oxidation of particulates, so that the honeycomb structure can be regenerated at a lower temperature.

Also, in the present invention, the ceramic particles included in the composite material should preferably be silicon carbide because the latter has a high thermal conductivity.

In the exhaust gas purifying apparatus according to the present invention, a filter regenerating means may be provided which includes a heating means for burning particulates captured by the honeycomb structure at a temperature of 250 to 800 °C. The captured particulates are burned at the temperature of 250 to 800 °C by the filter regenerating means or by the heat of the exhaust gas itself without using the filter regenerating means, to thereby regenerate the filter.

If the burning temperature is lower than 250°C, NOx in exhaust gas is not easily changed into NO₂ gas which can easily be activated. If the temperature is more than 800°C, the silicon will be melted to fill in pores in the honeycomb structure, resulting in a increased pressure loss. Also, the melted silicon will cover the precious metal (Pt, Rh, Pd or the like) supported as a catalyst to reduce the contact of the precious metal with the particulates and exhaust gas, and thus inhibit easy reaction of the precious metal with the particulates and exhaust gas.

The filter regenerating temperature should preferably be within a range of 500 to 800 °C. At a temperature of 500°C or more, oxygen and precious metal (Pt, for example) react with each other more easily so that the oxygen can be activated more easily.

Note that it has been believed that since the melting point of silicon is 1,410°C, the silicon can withstand even a temperature as high as about 1,000°C. However, it has been found that some components in exhaust gas will cause the silicon to be oxidative-corroded (the silicon will change into silica, silicon oxide, silicon dioxide or the like, for example) and also the silicon to be melted.

Also, in addition to the precious metal element (Pt, Rh, Pd or the like), an alkali metal (K, Na, Ba or the like), alkali earth metal (Ca or the like) or rare earth element (Ce, La or the like) is added as a catalyst as the case may be.

Among others, the alkali metal or alkali earth metal is highly reactive with silicon is apt to corrode the silicon. However, it is believed that the silicon can be protected against such corrosion by the variety of catalysts. Some other metals may be used as the catalyst. For example, a NOx occlusive reduction type catalyst, oxygen concentration adjusting catalyst and the like may be included in the category of catalysts usable in the present invention.

The NOx occlusive reduction type catalyst is as follows. That is, in an oxygen-excessive atmosphere (lean state) as in a diesel engine, NO is changed by oxygen activated by a precious metal (Pt, Rh, Pd or the like) into NO₂, and an NOx occluding alkali metal or alkali earth metal or the like is made to occlude the NO₂ in the form of nitrate. Thereafter, the engine system is put into a rich state (in theoretical air/fuel ratio) to change NO into NO₂ which will react with CO and HC to thus convert the gas, and the heat of reaction is used to purify particulates as well by burning.

Also, it is believed that a rare earth oxide such as ceria (CeO₂) lantana (La₂O₃) or the like can be used as the catalyst to improve the catalyst's function of adjusting the oxygen concentration. The "adjustment of oxygen concentration" referred to herein means to adjust the oxygen concentration by the state of atmosphere (exhaust gas) near the catalyst (rare earth oxide).

More specifically, exhaust gas from the diesel engine is normally an oxygen-excessive atmosphere (lean state) but the engine system can be shifted to an exhaust mode (in which the exhaust gas is in rich state), for example (in this case, the aforementioned exhaust gas purifying method can be employed). Also, even if the diesel engine is in an operation in which the exhaust gas is in lean state, particulates are captured so that microscopically, portions of the filter to be in contact with the catalyst will lose the contact with the atmosphere and thus the exhaust gas will be in rich state.

Since the atmosphere will be short of oxygen due to such a status, the oxygen in the rare earth oxide (activated oxygen having a high reactivity) is used to promote the oxidation.

The above will be explained in detail below using ceria as the catalyst. The oxidation-reduction potential of Ce³⁺ and Ce⁴⁺ is relative low and a reversible reaction represented as follows will proceed:

2CeO₂ ⇔ Ce₂O₃ + 1/2O₂

More particularly, when the exhaust gas is in the rich state, the reversible reaction will proceed rightward (as indicated with the arrow) to supply oxygen (highly active oxygen) to the atmosphere. On the contrary, when the exhaust gas is in the lean state, the reversible reaction will proceed leftward (also indicated with the arrow) to occlude excess oxygen in the atmosphere. By adjusting the oxygen concentration in the atmosphere in this way, the ceria will allow efficient reaction of oxidation between the activated oxygen and particulates or the like.

If the honeycomb structure or the filter contains crystalline silicon in addition to the ceramics, transfer of charges to the catalyst is promoted by the crystalline ceramics, that is, the oxidation will occur more easily without having to changing the oxygen concentration in the atmosphere (rich: spike).

It is inferred that the mechanism of the above is as follows:

Generally, the oxidation is a reaction of losing electrons and the reduction is a reaction of gaining electrons. A mixture of ceramics and crystalline silicon promotes transfer of electrons. Therefore, the above-mentioned reaction, if any, of charges of Ce³⁺ and Ce⁺⁴ in oxidation and reduction can be made to proceed smoothly in an opposite direction as well. Therefore, a reaction, once occurred, will not be ceased by any shortage of charges and oxygen.

Similarly, it is believed that even if oxidation of particulates and the like has increased the charges on the catalyst, the charges can easily be supplied for the reduction of exhaust gas and activated oxygen can smoothly be absorbed and released.

As having been described in the foregoing, in the exhaust gas purifying apparatus according to the present invention, the honeycomb structure is formed from the composite material comprising ceramic particles and crystalline silicon to capture particulates in exhaust gas, and the particulates are heated at a temperature of 250 to 800 °C by the filter regenerating means including a heating means such as a heater or the like provided in the exhaust gas purifying apparatus or by the heat of the exhaust gas itself without using the filter regenerating means. Thus, the honeycomb structure is excellent in catalyst activity and thermal diffusion, and in thermal shock resistance as well because the thermal stress will not easily be stored even after a temperature distribution takes place and heat cycle is repeated.

### BRIEF DESCRIPTION OF THE DRAWINGS

FIG. 1 is a schematic perspective view of an example of the honeycomb structure used in the exhaust gas purifying apparatus according to the present invention;
FIG. 2(a) is a schematic perspective view of an example of the porous ceramic member included in the honeycomb structure shown in FIG. 1, and FIG. 2(b) is a sectional view, taken along the line A-A in FIG. 2(a), of the porous ceramic member;
FIG. 3(a) is a schematic perspective view of another example of the honeycomb structure used in the exhaust gas purifying apparatus according to the present invention, and FIG. 3(b) is a sectional view, taken along the line B-B in FIG. 3(a), of the honeycomb structure;
FIG. 4 is a schematic sectional view of an example of the exhaust gas purifying apparatus according to the present invention;
FIG. 5 is a block diagram explaining the use of the exhaust gas purifying apparatus according to the present invention with an on-vehicle diesel engine;
FIG. 6 graphically illustrates the results of X-ray diffraction made of a sample 1 of the honeycomb structure;
FIG. 7(a) shows SEM pictures (with powers of 350X and 1,000X) of a section of the honeycomb structure sample 1 regenerated by heating at 500°C, and FIG. 7(b) shows SEM pictures (350X and 1,000X) of a section of the honeycomb structure sample 1 generated by heating at 850°C; and
FIG. 8(a) graphically illustrates relations of NOx removing rate and regeneration rate versus temperature of the honeycomb structure sample 1,
   FIG. 8(b) graphically illustrates relations of NOx removing rate and regeneration rate versus temperature of a honeycomb structure sample 2,
   FIG. 8(c) graphically illustrates relations of NOx removing rate and regeneration rate versus temperature of a honeycomb structure sample 3,
   FIG. 8(d) graphically illustrates relations of NOx removing rate and regeneration rate versus temperature of a honeycomb structure sample 4,
   FIG. 8(e) graphically illustrates relations of NOx removing rate and regeneration rate versus temperature of a honeycomb structure sample 5,
   FIG. 8(f) graphically illustrates relations of NOx removing rate and regeneration rate versus temperature of a honeycomb structure sample 6,
   FIG. 8(g) graphically illustrates relations of NOx removing rate and regeneration rate versus temperature of a honeycomb structure sample 7,
   FIG. 8(h) graphically illustrates relations of NOx removing rate and regeneration rate versus temperature of a honeycomb structure sample 8,
   FIG. 8(i) graphically illustrates relations of NOx removing rate and regeneration rate versus temperature of a honeycomb structure sample 9,
   FIG. 8(j) graphically illustrates relations of NOx removing rate and regeneration rate versus temperature of a honeycomb structure sample 10,
   FIG. 8(k) graphically illustrates relations of NOx removing rate and regeneration rate versus temperature of a honeycomb structure sample 11 and FIG. 8(1) graphically illustrates relations of NOx removing rate and regeneration rate versus temperature of a honeycomb structure sample 12.

### BEST MODE FOR CARRYING OUT THE INVENTION

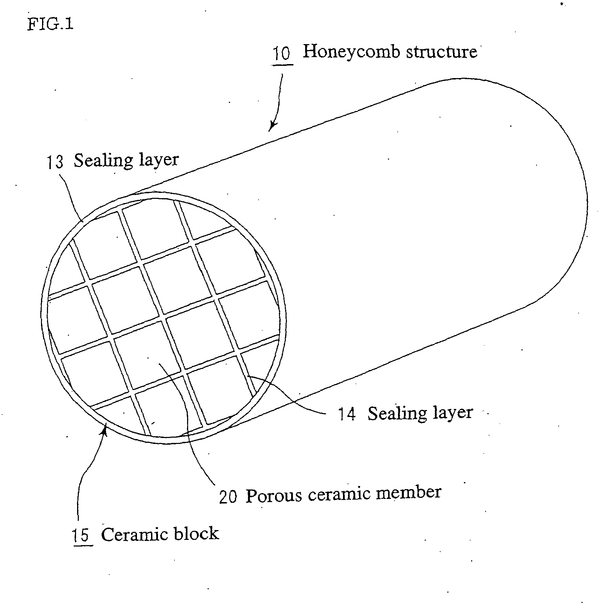

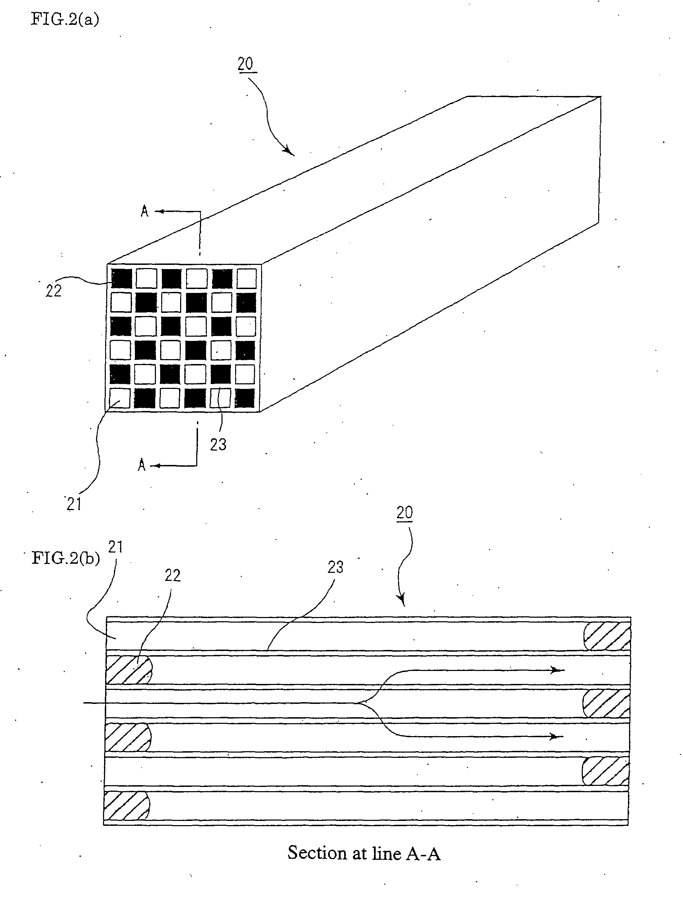

FIG. 1 is a schematic perspective view of an embodiment (aggregate type) of the honeycomb structure used as a filter in the exhaust gas purifying apparatus according to the present invention, FIG. 2(a) is also a schematic perspective view of an example of the porous ceramic member included in the honeycomb structure shown in FIG. 1, and FIG. 2(b) is a sectional view, taken along the line A-A in FIG. 2(a), of the porous ceramic member in FIG. 2(a).

As shown in FIG. 1, in the honeycomb structure, generally indicated with a reference numeral 10, a cylindrical ceramic block 15 includes a plurality of porous ceramic members 20 bound together with a sealing layer 14 being laid between adjacent ones of the ceramic members 20, and a sealing layer 13 is formed over the outer surface of the ceramic block 15.

As shown in FIG. 2, each of the square-pillar shaped porous ceramic members 20 includes a plurality of cells 21 disposed side by side longitudinally with a cell wall 23 being laid between adjacent ones of the cells 21.

The honeycomb structure 10 is used as a honeycomb filter to capture particulates in exhaust gas. Each of cells 21 of the porous ceramic member 20 is sealed at any of the ends thereof with a sealing material 22 as shown in FIG. 2(b).

More particularly, in the honeycomb structure 10 used in the exhaust gas purifying apparatus according to the present invention, selected ones of the cells 21 should desirably be sealed at one end of the ceramic block 15 with the sealing material 22 and the cells 21, not sealed at the one end of the ceramic block 15 with the sealing material 22, should desirably be sealed at the other end of the ceramic block 15 with the sealing material 22.

In this honeycomb structure 10, exhaust gas having flowed in one of the cell 21 passes through the cell walls 23 isolating the cells 21 from each other and then flows out from the other cell 21. Namely, the cell walls 23 isolating the cells 21 from each other work as filters to capture particulates in the exhaust gas.

Note that the sealing layer 13 formed over the outer surface ceramic block 15 is so shaped as to prevent leakage of the exhaust gas from the outer surface when the honeycomb structure 10 is used as a filter.

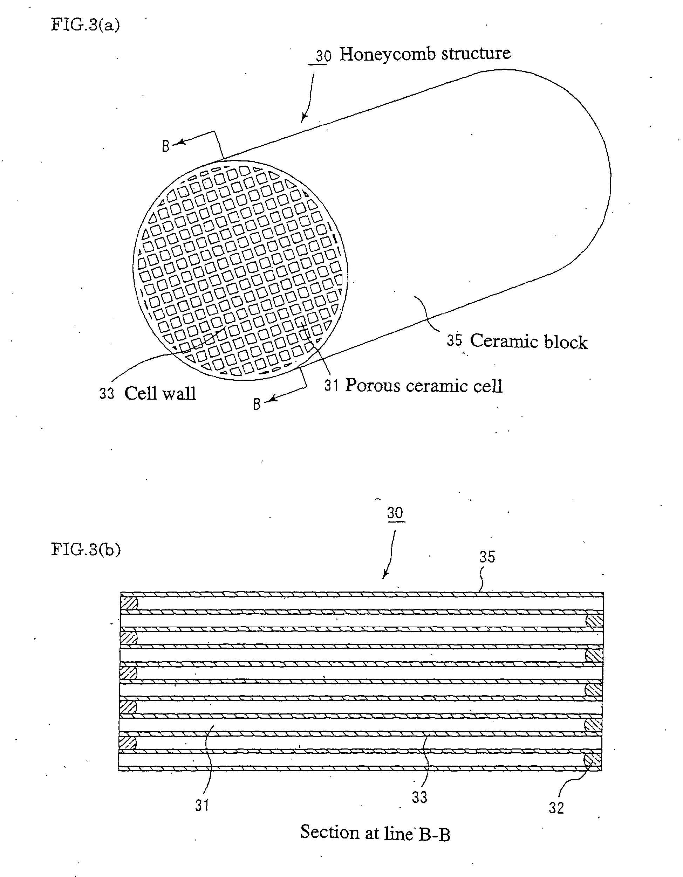

FIG. 3(a) is a schematic perspective view of another embodiment (integral type) of the honeycomb structure used as a filter in the exhaust gas purifying apparatus according to the present invention, and FIG. 3(b) is a sectional view taken along the line B-B of the honeycomb structure.

As shown in FIG. 3(a), the honeycomb structure, generally indicated with a reference numeral 30, includes a cylindrical ceramic block 35 formed from a plurality of porous ceramic cells 31 disposed longitudinally with a cell wall 33 being laid between adjacent ones of the cells 31.

Also, this honeycomb structure 30 is basically the same in configuration as the aggregate type, and it is used a honeycomb filter to capture particulates in exhaust gas.

Note that in this embodiment, a sealing layer (not shown in FIG. 3) may be formed over the outer surface of the ceramic block 35 as in the case of the aggregate type honeycomb structure 10 shown in FIG. 1.

In the honeycomb structures 10 and 30, the ceramic blocks 15 and 35 should preferably be formed from porous ceramics in which ceramic particles are bonded together by a high-crystallinity crystalline silicon.

The ceramic particles may be of any selected one of oxide ceramics such as cordielite, alumina, silica, mullite, zirconia, yttria, etc., carbide ceramics such as silicon carbide, zirconium carbide, titanium carbide, tantalum carbide, tungsten carbide, etc., and nitride ceramics such as aluminum nitride, silicon nitride, boron nitride, titanium nitride, etc.

According to the present invention, silicon carbide should desirably be selected from the above materials for the aggregate honeycomb structure as shown in FIG. 1 because its particles are high in thermal resistance, excellent in mechanical properties and chemical stability and also high in thermal conductivity.

Also, according to the present invention, oxide ceramics such as alumina or the like should desirably be used for the integral honeycomb structure as shown in FIG. 3 for the reason that it is inexpensive, relatively small in thermal expansion coefficient and the honeycomb structure made of this material will not be destroyed and oxidized while it is being used as the honeycomb filter, for example.

The thermal conductivity of the honeycomb used in the exhaust gas purifying apparatus according to the present invention depends upon the crystallinity of the crystalline silicon and kind of the ceramic particles used. In case the ceramic particles are of ceramic carbide or ceramic nitride, the thermal conductivity should desirably be 3 to 60 W/m·k, and more desirably 10 to 40 W/m.k.

If the thermal conductivity is less than 3 W/m·k, the honeycomb structure will be poor in thermal conduction, and a temperature gradient will easily take place longitudinally of the honeycomb structure which will thus easily be cracked. On the other hand, if the thermal conductivity is more than 60 W/m.k, the honeycomb structure will be good in thermal conduction but the thermal diffusion will be so large that the temperature will not easily rise. Also, the honeycomb structure is easily cooled at the heat outlet side where a temperature gradient will easily take place and thus the honeycomb structure will thus easily be cracked.

Also, in case oxide ceramics (cordielite, for example) is used as ceramic particles, the thermal conductivity should desirably be within a range of 0.1 to 10 W/m.k, and more desirably be within a range of 0.3 to 3 W/m·k.

If the thermal conductivity is less than 0.1 W/m.k, the honeycomb structure will be poor in thermal conduction, and the temperature will change longitudinally of the honeycomb structure which will thus easily be cracked. On the other hand, if the thermal conductivity is more than 10 W/m.k, the honeycomb structure will be good in thermal conduction but the thermal diffusion will be so large that the temperature will not easily rise. Also, the honeycomb structure is easily cooled at the heat outlet side where a temperature gradient will easily take place and thus the honeycomb structure will thus easily be cracked.

The aforementioned desirable range of thermal conductivity is a measure of the electric conductivity as well.

In the honeycomb structures shown in FIGS. 1 and 3, the ceramic blocks 15 and 35 are cylindrical. According to the present invention, however, the shape of the honeycomb structure is not limited to the cylindrical one but it may be shaped to have the form of an elliptic-pillar shaped form, square-pillar shaped form or the like.

Also, the porosity of the ceramic block should preferably be about 20 to 80 %. If the porosity is less than 20%, the ceramic block used as a honeycomb filter is likely to be clogged. On the contrary, if the porosity is more than 80%, the strength of the ceramic block will be lower and easily be broken in some cases.

Note that the porosity can be measured by any well-known method such as the mercury injection method, Alkhimedes method or measurement by a scanning electron microscope (SEM).

Also, the ceramic block should preferably be of about 5 to 100 µm in mean pore diameter. If the mean pore diameter is less than 5 µm, the ceramic block used as a honeycomb filter is easily clogged in some cases. On the other hand, if the mean pore diameter is more than 100 µm, particulates will pass through the pores and cannot be captured, and the ceramic block cannot function as any filter.

The size of ceramic particles used to form such a ceramic block should preferably be such that the ceramic block will not be shrunk in a subsequent step in which it is subjected to sintering. On this account, the ceramic particles should preferably include, for example, 100 parts by weight of ceramic powder whose mean particle size is about 0.3 to 50 µm and 5 to 65 parts by weight of ceramic powder whose mean particle size is about 0.1 to 1.0 µm.

With the ceramic powder of the particle sizes being mixed at the above ratio, a ceramic block can advantageously be formed from porous ceramics.

In the honeycomb structure used in the exhaust gas purifying apparatus according to the present invention, a sealing material filled in any one of the ends of the ceramic block should desirably be porous ceramics. Since the ceramic block filled at the ends thereof with the sealing material is formed from porous ceramics, use of the same porous ceramics for the sealing material as that for the ceramic block permits to improve the strength of bonding between the sealing material and ceramic block. Also, adjusting the porosity of the sealing material similarly to that of the ceramic block permits to match the coefficient of thermal expansion of the ceramic block with that of the sealing material. Thus, it is possible to prevent any clearance from occurring between the sealing material and cell wall due to the thermal stress during production and use of the honeycomb structure, and a crack from taking place in the sealing material as well as in a wall portion which is in contact with the sealing material.

In case the sealing material is of porous ceramics, it may be of a material similar to the ceramic particles or crystalline silicon used to form the ceramic block.

In case the honeycomb structure used in the exhaust gas purifying apparatus according to the present invention is of the aggregate type shown in FIG. 1, the sealing layers 13 and 14 are formed over the outer surface of the ceramic block 15 and between the adjacent ones of the porous ceramic members 20, respectively. The sealing layer 14 formed between the adjacent ones of the porous ceramic members 20 functions as an adhesive which binds a plurality of porous ceramic members 20 together, while the sealing layer 13 formed on the outer surface of the ceramic block 15 functions as a sealing material which prevents exhaust gas from leaking from the outer surface of the ceramic block 15 when the honeycomb structure 10 is installed as a filter in an exhaust passage in an internal combustion engine.

The material of the above-mentioned sealing layers may comprise, for example, inorganic binder, organic binder, inorganic fiber and/or inorganic particles.

Note that although the sealing layers in the honeycomb used in the exhaust gas purifying apparatus according to the present invention are formed between adjacent ones of the porous ceramic members and over the outer surface of the ceramic block, respectively, as above, both the sealing layers may be formed from same materials or from different materials, respectively. In case both the sealing layers are formed from the same materials, the materials may be mixed together at either the same ratio for both the sealing layers or at different ratios for the sealing layers, respectively.

The inorganic binder used in the sealing layer may be, for example, any one of silica sol, alumina sol and the like. They may be used singly, or two or more of them may be used in combination. Of the inorganic binders, the silica sol should desirably be selected.

The organic binder used in the sealing layer may be, for example, one of polyvinyl alcohol, methyl cellulose, ethyl cellulose, carboxymethyl cellulose and the like. They may be used singly, or two or more may be used in combination. Of the organic binders, the carboxymethyl cellulose should desirably be selected.

The inorganic fiber used in the sealing layer may be, for example, one of ceramic fibers such as silica-alumina, mullite, alumina, silica and the like. They may be used singly, or two or more of them may be used in combination. Of the inorganic fibers, the silica-alumina should desirably be selected.

Also, the inorganic particles used in the sealing layer may be, for example, one of carbide, nitride, etc., and more particularly, one of inorganic powder or whisker of silicon carbide, silicon nitride, boron nitride and the like. Of the organic particles, the silicon carbide should desirably be selected because it is excellent in thermal conductivity.

The sealing layer 14 may be formed from a compact material. In case the honeycomb structure used in the exhaust gas purifying apparatus according to the present invention is to be used as the aforementioned filter, the material of the sealing layer 14 may be a porous one to allow exhaust gas to flow into the filter. However, the sealing layer 13 should desirably be formed from a compact material because it is provided to prevent exhaust gas from leaking from the outer surface of the ceramic block 15 when the honeycomb structure 10 is installed as an exhaust gas purifying filter in an exhaust passage in an internal combustion engine.

As having been explained above with reference to FIGS. 1 to 3, with selected ones of the cells being filled with a sealing material at one of the ends of the ceramic block included in the honeycomb structure, the honeycomb structure can be used suitably as an exhaust gas purifying honeycomb filter to capture particulates in exhaust gas from an internal combustion engine such as diesel engine.

Also, in case the honeycomb structure is to be used as an exhaust gas purifying honeycomb filter, a catalyst such as Pt or the like may be provided on the cell walls of the ceramic block to promote baking of particulates when regenerating the honeycomb block.

Also, in the honeycomb structure used in the exhaust gas converting apparatus (catalyst converter) according to the present invention, a catalyst made from a precious metal such as Pt, Rh, Pd or the like is supported on the ceramic block. The catalyst can be used to convert HC, CO, NOx and the like in exhaust gas from a heat engine such as internal combustion engine, a combustion equipment such as boiler, etc. as well as to modify or otherwise process liquid fuel or gas fuel.

Note that in case the honeycomb structure used in the exhaust gas converting apparatus(catalyst converter) according to the present invention is to be used as a carrier of the above-mentioned catalyst, the sealing material is not necessarily required.

Next, there will be explained an example of the production of the honeycomb structure, used in the exhaust gas converting apparatus according to the present invention, in which selected ones of the cells are filled at one of the ends of the ceramic block with a sealing material.

In case the honeycomb structure used in the exhaust gas converting apparatus according to the present invention is of the integral type as shown in FIG. 3 in which all the cells are formed as one ceramic block, a crude paste comprising mainly the aforementioned ceramic particles and crystalline silicon is formed, by extrusion molding, into a ceramic molding similar in shape to the honeycomb structure 30 in FIG. 3.

The crude paste should desirably be such that the porosity of the ceramic block will be 20 to 80 % after production of the honeycomb structure. It should be, for example, a paste comprising a mixture of the ceramic particles and crystalline silicon and having a binder and dispersion liquid added thereto.

Note that in case the honeycomb structure used in the exhaust gas purifying apparatus according to the present invention is formed from porous ceramics in which ceramic particles are bonded together by a high-crystallinity crystalline silicon, the crystalline silicon particles should preferably be powder of highly pure silicon such as single crystal silicon for production of the honeycomb structure.

The crystalline silicon particles included in the porous ceramics should preferably have a mean particle size of 0.1 to 30 µm, for example. A mean particle size of less than 0.1 µm will cause aggregation of the particles and an uneven distribution of Si particles while a mean particle size of more than 30 µm will also cause an uneven distribution of Si particles.

The crystalline silicon particles will melt when heated after degreasing which will be described in detail later, and wet the surface of ceramic particles to bind the ceramic particles together. The amount of the crystalline silicon particles to be mixed varies depending upon the size, shape, etc. of the ceramic particles. The amount should preferably be 5 to 50 parts by weight for 100 parts by weight of the mixture.

An amount, an amount, less than 5 parts by weight, of the crystalline silicon particles is too small to appropriately function as a binder which binds the ceramic particles together, so that a honeycomb structure (ceramic block) thus formed will not have any sufficient strength in some cases. On the other hand, an amount, more than 50 parts by weight, of the crystalline silicon particles will result in a honeycomb structure which is excessively compact and whose porosity is low. In case the honeycomb structure is used as an exhaust gas purifying honeycomb filter, the pressure loss will soon be greater while particulates are being captured, so that the honeycomb structure will not be able to work well as a filter.

The binder may be made from, for example, one of methyl cellulose, carboxymethyl cellulose, hydroxyethyl cellulose, polyethylene glycol, phenol resin, epoxy resin, etc.

Normally, the amount of the binder to be mixed should desirably 1 to 10 parts by weight for 100 parts by weight of the ceramic particles.

The dispersion liquid may be an organic solvent such as benzene, alcohol such as methanol or water, and mixed in the mixture of the ceramic particles and crystalline silicon so that the crude paste will have a viscosity falling within a predetermined range.

The mixture of ceramic particles and crystalline silicon, and binder and dispersion liquid are mixed together by an attritor, and sufficiently kneaded by a kneader or the like to provide a crude paste. The crude paste is formed into the ceramic molding by extrusion molding.

Also, a molding additive agent may be added to the crude paste as necessary. The molding additive agent may be, for example, ethylene glycol, dextrin, fatty acid soap, polyalcohol or the like.

Further, a pore forming agent such as micro hollow globes of oxide ceramics, spherical acrylic particles, graphite or the like may be added to the crude paste as necessary.

The balloon may be, for example, alumina balloon, glass micro balloon, Shirasu balloon, fly ash balloon (FA balloon), mullite balloon or the like. Of these balloons, the fly ash balloon should desirably be selected.

The ceramic molding is dried by a microwave dryer, hot-air dryer, dielectric dryer, reduced-pressure dryer, vacuum dryer, freeze-drying dryer or the like to provide a dry ceramic molding. Then, each of selected ones of the cells is sealed, by filling, at one end thereof with the crude paste as a sealing material.

Note that the sealing material may be similar to the crude paste. For example, the sealing material should desirably be a mixture of ceramic particles and crystalline silicon, used to prepare the crude paste, and which has added thereto a lubricant, solvent, dispersant and binder. This is because the ceramic particles can be prevented from settling in the sealing material in the course of sealing the cell ends.

Next, the dry ceramic molding filled with the sealing material is heated at a temperature of about 150 to 700 °C to remove the binder from the dry ceramic molding, and the dry ceramic molding is degreased to provide a degreased ceramic molding.

The degreasing should desirably be done at a temperature lower than the melding point of the silicon in an oxidizing atmosphere or in an atmosphere of an inactive gas such as nitrogen, argon or the like.

Note that the degreasing atmosphere should be optimum for the amount of the binder used, type of the ceramic particles, etc.

Next, the degreased ceramic molding is heated at a temperature of about 1,400 to 1,600 °C to soften (melt) the crystalline silicon particles to provide a porous ceramic structure in which the ceramic particles are bonded together by the crystalline silicon particles.

Note that at this stage of the process of production, the half-width of silicon peak (2θ = about 28°), observed by the X-ray diffraction, of the porous ceramic structure is more than 0.6°, namely, the porous ceramic structure is yet low in crystallinity.

The porous ceramic structure yet low in crystallinity is further heated at a temperature of about 1,800 to 2,100 °C to promote the crystallization of the crystalline silicon particles bonding the ceramic particles together, to thereby provide a high-crystallinity crystalline silicon. Thus, there can be produced a honeycomb structure (honeycomb block) which is the porous ceramic structure (ceramic block).

At this time, the half-width of silicon peak (2θ = about 28°), observed by the X-ray diffraction, of the honeycomb structure thus made is 0.6° or less, namely, the honeycomb structure gets a high crystallinity.

Also, a honeycomb structure, in which ceramic particles are bonded together by low-crystallinity silicon particles whose half-width of peak (2θ = about 28°) observed by the X-ray diffraction is more than 0.6°, can be produced from crystalline silicon particles low in purity by heating the aforementioned dry ceramic molding at a temperature of 1,400 to 1,600 °C.

In the honeycomb structure produced as above, selected ones of the cells in the ceramic block are sealed at one end thereof, and the honeycomb structure can suitably be used as the exhaust gas purifying honeycomb filter.

Also in this case, the cell walls of the ceramic block may be formed to support a catalyst made from Pt or the like which promotes burning of the particulates when regenerating the honeycomb filter.

Also, the honeycomb structure is usable to convert HC, CO, NOx, etc. in exhaust gas from a heat engine such as internal combustion engine, combustion equipment such as boiler, etc. and also usable as a carrier of a catalyst to modify or otherwise process liquid fuel or gas fuel. In such a case, a catalyst made from a precious metal such as Pt, Rh, Pd or the like or an alloy of them should be supported on the cell wall of the ceramic block. It should be noted that in this case, the sealing by filling the sealing material is not necessarily required.

In case the honeycomb structure (constructed as shown in FIG. 1) used in the exhaust gas purifying apparatus according to the present invention is of the aggregate type in which a plurality of the porous ceramic members are bound together by the sealing layers being laid between adjacent ones of the ceramic members, the crude paste comprising mainly the ceramic particles and crystalline silicon particles is first formed, by extrusion molding, into a green molding having the generally same shape as the porous ceramic member 20 shown in FIG. 2.

Note that the crude paste may be the same as that having been described in connection with the aforementioned integral honeycomb structure.

Next, the green molding is dried by a microwave dryer or the like to provide a dry molding. Then, selected ones of cells in the dry molding are sealed, by filling, at one end thereof to seal the cells with a paste-like sealing material.

Note that the sealing material may be similar to that having been explained in connection with the integral honeycomb structure. The sealing may be done similarly to that made for the integral honeycomb structure except that the sealing material is filled in different cells from those in the integral honeycomb structure.

Next, the dry molding thus sealed is degreased similarly to the integral honeycomb structure to provide a porous ceramic molding. The porous ceramic molding is heated and baked under the similar conditions to those for the integral honeycomb structure to provide a porous ceramic member in which a plurality of cells is arranged longitudinally with a cell wall being laid between adjacent ones of the cells.

Next, the porous ceramic member is applied on the lateral surface thereof with a sealing paste to a uniform thickness to form a sealing layer 14, and another porous ceramic member 20 is stacked on the sealing layer 14. This stacking is effected repeatedly to form a stack of pillar-shaped porous ceramic members 20, having a predetermined size.

Note that the material of the sealing paste has been described in connection with the honeycomb structure used in the exhaust gas purifying apparatus according to the present invention and so will not be described any more.

Next, the stack of the porous ceramic members 20 is heated to dry and solidify the sealing layers 14. Thereafter, the stack is cut by a diamond cutter or the like for the outer surface thereof to have a shape as shown in FIG. 1, thereby producing the ceramic block 15.

Then, the sealing paste is applied over the outer surface of the ceramic block 15 to form the sealing layer 13. Thus, there is provided a honeycomb structure in which a plurality of porous ceramic members is bound together with the sealing layers being laid between adjacent ones of the porous ceramic members.

The honeycomb structure including the ceramic blocks (porous ceramic members) having selected ones of the cells sealed at one end thereof with the sealing material is suitably usable as the exhaust gas purifying honeycomb filter. Also in this case, a catalyst made from Pt or the like may be supported on the cell wall of the ceramic block (porous ceramic member) to promote burning of particulates when regenerating the honeycomb filter.

Also, the honeycomb structure used in the exhaust gas purifying apparatus according to the present invention is usable to convert HC, CO, NOx, etc. in exhaust gas from a heat engine such as internal combustion engine, combustion equipment such as boiler, and also usable as a carrier of a catalyst to modify or otherwise process liquid fuel or gas fuel. In such a case, a catalyst made from a precious metal such as Pt, Rh, Pd or the like or an alloy of them should be supported on the cell wall of the ceramic block. It should be noted that in this case, the sealing by filling the sealing material is not necessarily required.

Next, there will be explained the exhaust gas purifying apparatus using the aforementioned honeycomb structure as a filter.

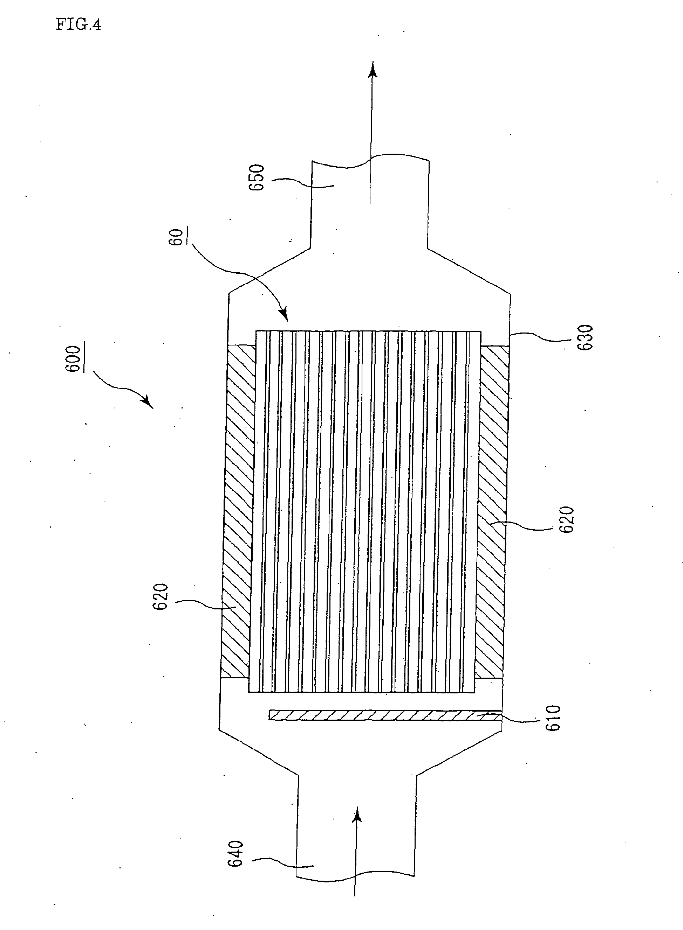

FIG. 4 is a schematic sectional view of an example of the exhaust gas purifying apparatus according to the present invention, in which a honeycomb structure is installed as an exhaust gas purifying filter.

As shown, the exhaust gas purifying apparatus, generally indicated with a reference numeral 600, includes a honeycomb filter 60, casing 630 covering the outside of the honeycomb filter 60, holding sealing material 620 disposed between the honeycomb filter 60 and casing 630, and a heating means 610 provided at the exhaust gas inlet side of the honeycomb filter 60.

An inlet pipe 640 connected to an internal combustion engine or the like is connected to one side of the casing 630 to which exhaust gas is supplied, and an exhaust pipe 650 connected to outside is connected to the other side of the casing 630. It should be noted that the arrow in FIG. 4 indicates the flow of exhaust gas.

A carrier of a catalyst made from Pt should desirably be provided in each of the inlet pipe and casing of the honeycomb filter. A reducing agent (HC or the like) for unburnt fuel or the like, released into the exhaust pipe by a post-injection method or using a fuel addition nozzle, will react with a precious metal catalyst (Pt, Rh, Pd or the like) to promote heating and conduct the heat to the honeycomb filter. The filter will thus be heated easily to a high temperature.

Also as shown in FIG. 4, the honeycomb filter 60 may be similar in configuration to either the honeycomb structure 10 shown in FIG. 1 or the honeycomb structure 30 shown in FIG. 3.

In the exhaust gas purifying apparatus 600 constructed as above, exhaust gas from the internal combustion engine, for example, is introduced into the casing 630 through the inlet pipe 640, has particulates captured and purified by the cell walls (partitions) when passing through the latter from one to another cell of the honeycomb filter 60, and then is discharged to outside through the outlet pipe 650.

Then, when a large amount of particulates is deposited on the cell walls of the honeycomb filter 60, the pressure of the exhaust gas will be lost largely. At this time, the honeycomb filter 60 is to be regenerated.

In the regeneration, a gas heated by the heating means 610 is supplied into the cells of the honeycomb filter 60 which will thus be heated. The particulates deposited on the cell walls are removed by burning with the heating of the honeycomb filter 60.

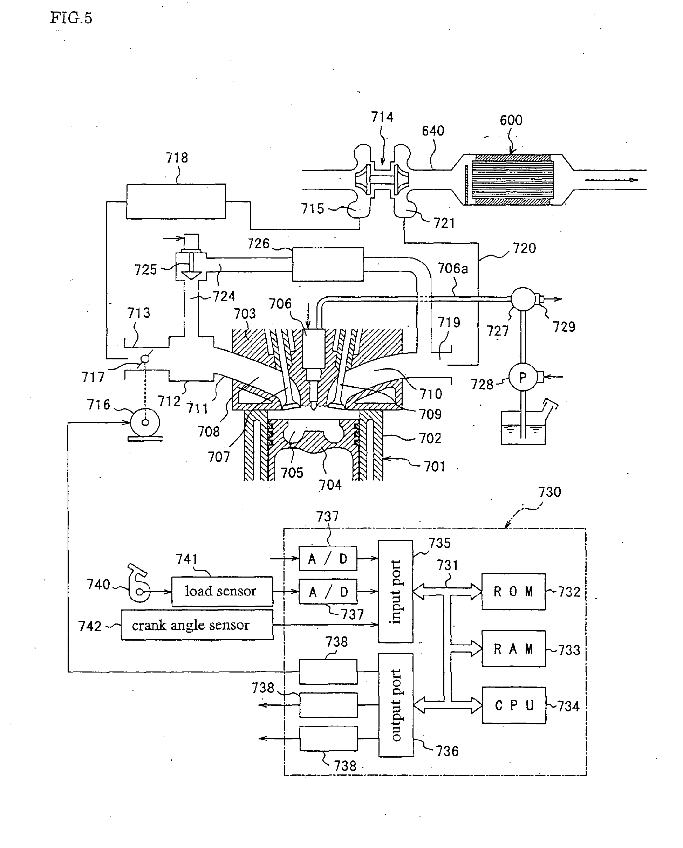

Also, as will further be described later, drive circuits 738 as shown in FIG. 5 may be controlled while detecting the temperature of the filter, and particulates may be removed by burning with the injection timing being changed while controlling a fuel injection valve 706, throttle valve, EGR, etc. (in a post-injection mode).

Also, in case the catalyst made from Pt or the like is supported on the cell wall of the honeycomb filter 60 to promote burning of the particulates, since the temperature at which the particulates are burned will fall. Therefore, the honeycomb filter 60 may be heated at a lower temperature by the heating means 610, or by only the heat of the exhaust gas itself without having to heat by the heating means 610.

According to the present invention, the exhaust gas purifying apparatus 600 is constructed to remove, by burning, the particulates (in the regeneration) at a temperature not exceeding 800°C, preferably at a temperature of 250 to 800 °C or more preferably at a temperature of 500 to 800 °C.

Next, the application of the exhaust gas purifying apparatus according to the present invention to an on-vehicle diesel engine will be described with reference to FIG. 5.

As shown in FIG. 5, the reference numeral 701 indicates an engine body, 702 indicates a cylinder block, 703 indicates a cylinder head, 704 indicates a piston, 705 indicates a combustion chamber, 706 indicates an electronically-controlled fuel injection valve, 707 indicates a suction valve, 708 indicates a suction port, 709 indicates an exhaust valve, and 710 indicates an exhaust port.

The suction port 708 is connected to a surge tank 712 via a suction branch pipe 711, and the surge tank 712 is connected to a compressor 715 of an exhaust turbo charger 714 via a suction duct 713. The suction duct 713 has disposed therein a throttle valve 717 driven by a step motor 716, and a cooling unit 718 to cool sucked air flowing through the suction duct 713 is provided around the suction duct 713. In the illustrated example, engine coolant is supplied to the cooling unit 718 to cool the sucked air.

On the other hand, the exhaust port 710 is connected to an exhaust turbine 721 of the exhaust turbo charger 714 via an exhaust manifold 719 and exhaust pipe 720, and the outlet of the exhaust turbine 721 is connected to the exhaust gas purifying apparatus 600 having the casing 630 in which the honeycomb filter 60 is built.

The exhaust manifold 719 and surge tank 712 are connected to each other via an exhaust gas recirculation (will be referred to as "EGR" hereunder) passage 724, and the EGR passage 724 has disposed therein an electronically-controlled EGR control valve 725. Also, around the EGR passage 724, there is disposed a cooling unit 726 to cool EGR gas flowing through the EGR passage 724. In the example shown in FIG. 5, engine coolant is supplied to the cooling unit 726 to cool the EGR gas.

On the other hand, each of the fuel injection valves 706 is connected to a fuel reservoir 727 which is a so-called common rail via a fuel supply pipe 706a. Fuel is supplied from an electronically-controlled variable-discharge fuel pump 728 into the common rail 727, and the fuel supplied into the common rail 727 is supplied to the fuel injection valve 706 via each fuel supply pipe 706a. The common rail 727 has installed thereon a fuel pressure sensor 729 to detect the fuel pressure in the common rail 727. The fuel pump 728 has the injection rate thereof controlled based on an output signal from the fuel pressure sensor 729 for the fuel pressure in the common rail 727 to arrive at a target fuel pressure.

Similarly, an air flow meter (not shown) is provided in the suction port 708 to control the suction valve 707, to thereby adjust the suction pressure.

The reference numeral 730 indicates an electronic control unit (ECU) including a digital computer. The ECU 730 can control the operational status of the internal combustion engine according to the operating condition of the internal combustion engine and a command from the operator of the vehicle.

That is, the ECU 730 has the fuel injection valve 706, EGR control valve 725, etc. connected thereto by electric wires, and can control each of these components.

The ECU 730 includes a ROM (read-only memory) 732, RAM (random-access memory) 733, backup RAM (not shown), CPU (microprocessor) 734, input port 735, output port 736, etc. connected to each other by a two-way bus 731.

Also, the input port 735 is supplied with a digital signal from a sensor, such as a crank position sensor 742 which generates an output pulse each time the crank shaft rotates one turn, and sends the signal having been received from the sensor to the CPU 734 and RAM 733 via the two-way bus 731.

Also, a first temperature sensor is installed on the inlet pipe 640 located before the honeycomb filter 60 to detect the temperature of the honeycomb filter 60, and a second temperature sensor is installed on the outlet pipe located after the honeycomb filter. Analog output signals from these first and second temperature sensors are sent to the input port 735 via a corresponding A-D converter 737, and they are sent from the input port 735 to the CPU 734 and RAM 733.

Also, a first pressure sensor is installed in the inlet pipe 640 located before the honeycomb filter 60 to detect the pressure to the honeycomb filter, and a second pressure sensor (which may be omitted but should desirably be provided in order to positively measure a differential pressure) is installed in the outlet pipe located after the honeycomb filter 60. Analog output signals from these pressure sensors are sent to the input port 735 via the corresponding A-D converter 737, and they are sent from the input port 735 to the CPU 734 and RAM 733.

The reference numeral 740 indicates a gas pedal. The gas pedal 740 has connected thereto a load sensor 741 which generates an output voltage proportional with a stroke L of depressing the gas pedal 740. The output voltage generated by the load sensor 741 is sent to the input port 735 via the corresponding A-D converter 737, and it is sent from the input port 735 to the CPU 734 and RAM 733.

Also, analog output signals from sensors such as the fuel pressure sensor 729, air flow meter, etc. are sent to the input port 735 via the corresponding A-D converter 737, and they are sent from the input port 735 to the CPU 734 and RAM 733.

The output port 736 is connected to the fuel injection valve 706, throttle valve driving step motor 716, EGR control valve 725, fuel pump 728, etc. by electric wires via a corresponding drive circuit 738, and sends a control signal from the CPU 734 to the fuel injection valve 706, EGR control valve 725, etc.

The ROM 732 has stored therein application programs such as a fuel injection control routine to control the fuel injection valve 706, an EGR control routine to control the EGR control valve 725, a routine for adding reducing agent to the filter for burning the latter, etc.

The ROM 732 has stored therein various control maps in addition to the application programs. The control maps include, for example, a post-injection rate control map showing a relation between a target filter temperature and post-injection rate, a fuel injection rate control map showing a relation between the operational status of the internal combustion engine 701 and basic fuel injection rate (basic length of fuel injection time), a deposited amount estimation map showing a relation between a difference in pressure between the inlet and outlet of the filter 60 and amount of particulates deposited on the filter 60, etc.

The RAW 733 stores output signals from the sensors and results of calculation made in the CPU 734. The results of calculation include, for example, revolution speed of the engine calculated based on a time interval at which the crank angle sensor 742 generates a pulse signal, pressure difference between the inlet and outlet of the filter 60 according to the present invention, etc.

These data are updated each time the crank angle sensor 742 generates a pulse signal, for example.

The backup RAM is a nonvolatile memory capable of storing data even after the internal combustion engine is stopped from operating.

The CPU 734 operates under an application program stored in the ROM 732 to control the fuel injection valve, EGR, filter regeneration, NOx removal, etc.

Note that although the filter temperature can actually be measured, a conversion table may be prepared by pre-monitoring the actual operational status (engine speed, torque, etc.), exhaust gas temperature and filter temperature to estimate a filter temperature based on a temperature of the exhaust gas without having to measure the filter temperature directly.

At this time, since the particulates deposited on the filter are burned to produce heat as the case may be, a conversion table for deposited amount of particulates and temperature elevation due to burning of the particulates should be prepared in advance.

Next, there will be described an example of the control of the temperature of the honeycomb structure used in the exhaust gas purifying apparatus according to the present invention.

Normally, the filter is to be regenerated by burning the particulates at a time when there will not yet take place any rapid increase of the back pressure due to an increased amount of captured particulates and breakage due to abnormal combustion (limit of particulate capture). In this example, timing of filter regeneration may be estimated based on the time length of driving, consumed amount of fuel, etc. but should preferably be calculated based on a pressure difference between the inlet and outlet of the filter, read on a manometer, exhaust gas temperature and exhaust gas flow rate.

More specifically, the pressure (differential pressure) and exhaust gas temperature are measured by the aforementioned sensors, and the exhaust gas flow rate is calculated based on the revolution speed and torque of the engine. Normally, the differential pressure and amount of particulates deposited on the filter are in a constant relation. Thus, by pre-determining this relation and mapping the relation (as data on the relation between the amount of deposited particulates and pressure loss), it is possible to easily determine an amount of particulates deposited on the filter. When the deposited amount arrives a predetermined value, the temperature of the filter 60 is controlled for regeneration of the filter 60. The heater is regenerated by controlling the elevation of the filter temperature. More particularly, the filter can be heated directly by a heat-producing apparatus such as a heater or indirectly by elevating the temperature of the exhaust gas. In this embodiment, the filter is heated by the latter method. One example of such a method is the post-injection in the combustion chamber. The post-injection is such that a small amount of fuel is additionally injected a dead time after a main-injection, and thus it is also called "after fuel injection". The fuel injected into the combustion chamber by the post-injection is modified into soft HC in the combustion gas and supplied to the exhaust system. That is, when a reducing agent is added to the exhaust system by the post-injection, soft HC which will act a reducing agent is supplied to increase the concentration of the reducing agent in the exhaust gas.

The reducing agent added to the exhaust system will cause an exothermic reaction in an oxidizing catalyst containing Pt (platinum), for example, even at a relatively low temperature (about 300°C).

More specifically, heat of reaction will occur as the result of exothermic reactions such as 4HC + 5O₂ → 2H₂O + 4CO₂, 4HC + 3O₂ → 2H₂O + 4CO, 2CO + O₂ → 2CO₂, etc.

Thus, the temperature of the filter can be elevated by the catalyst already supported on another filter (catalyst converter) before the filter, and by the added catalyst on the filter.

On the other hand, the post-injection method is practically advantageous in that it will require neither modification of the basic configuration of the internal combustion engine nor addition of any structure for fuel supply into the exhaust gas.

That is, the aforementioned fuel addition nozzle may be omitted. Further, the post-injection method is advantageous in emission of less black smoke when burning the fuel injected into the cylinder as well as in easy control of the timing and amount of fuel injection.

Since the exhaust gas constituents, oxygen concentration and exhaust gas temperature can be changed through comparison with the maps prepared based on monitored fuel pressure (in the common rail), suction pressure, engine revolution speed, engine load, timing of post-injection, etc., the filter temperature can be controlled to a target value, high or low.

More specifically, the operational status of the engine being running in a predetermined mode (with a predetermined engine revolution speed, torque, etc.) is monitored. Also, the exhaust gas temperature during the predetermined mode of running is monitored. The results of monitoring are supplied to the A-D converter. The exhaust gas temperature thus measured is taken as an initial temperature.

Next, the difference between the initial temperature and a specified temperature in the pre-stored map is determined. When the initial temperature is higher, the sequence of filter regeneration is made to proceed for elevating the filter temperature. If the initial temperature is lower, the sequence is made to proceed for lowering the filter temperature.

For elevation of the filter temperature, the exhaust gas temperature may be elevated, for example. In this case, the heat-producing apparatus such as heater is operated for a length of time selected based on the pre-stored temperature elevation map. With an actually measured temperature being fed back, the exhaust gas temperature can be controlled by correcting the length of operation time repeatedly.

Alternatively, in case the filter temperature is to be controlled by the post-injection method, not by any heater, oxygen concentration and unburnt fuel amount are estimated based on a map of deviations of injection angle measured with the engine being operated in the initial mode of operation (with a predetermined engine revolution speed, torque, etc.) Through comparison with a map of measured quantity of the heat produced when the oxygen and unburnt fuel arrive at the catalyst, a length of time of the post-injection is determined.

That is, under the control of the CPU 734, the fuel injection controller has the fuel injection valve 706 make a main-injection of fuel when the piston 704 has come to near the top dead center, and then has the fuel injection valve 706 make a post-injection asynchronously with the main-injection.

The electronic control unit (ECU) 730 includes a mode selecting means which makes a selection between a normal injection mode in which only a main-injection is done based on the operational status of the internal combustion engine and a post-injection mode in which main-injection and post-injection are made alternately at predetermined intervals.

For switching the mode of injection from the normal injection mode to post-injection mode or vice verse by the mode selecting means, main-injection start timing θ_{M}, main-injection end timing, post-injection start timing θₚ₂ and post-injection end timing are determined each in relation to a predetermined crank angle θₐ as a reference on the basis of the current operational status of the internal combustion engine, and an interval between injections made in the post-injection mode is set. In the post-injection mode, the interval of injection between the main-injection and post-injection is set to a predetermined time, while in the main-injection mode, the interval of injection is set to 0.

The ECU 30 reads a detection signal from each of the sensors as an input. Then, it controls the operation of the back-pressure control valve, fuel pump, etc. on the basis of the input from each sensor.

First, the ECU 30 is supplied with information such as an internal combustion engine revolution speed (Nₑ) and opening of the gas pedal, and judges the operational status of the engine on the basis of the information.

The mode selecting means judges, based on the operational status of the engine, whether the post-injection is to be done. In this embodiment, when the mode selecting means has determined that a larger amount of particulates than predetermined has been deposited on the filter, a post-injection is to be done.

In case it has been determined that a post-injection is to be done, main-injection start timing θ_{M}, main-injection end timing, post-injection start timing θₚ₂ and post-injection end timing are determined each in relation to a predetermined crank angle θₐ as a reference, detected by the crank angle sensor 742, and an interval and amount of fuel injection in the post-injection are set.

Finally, with an actual temperature being fed back, the settings are corrected repeatedly to control the temperature.

Next, the temperature is lowered. The post-injection is first stopped. For changing the temperature more, the initial mode of operation (with predetermined engine revolution speed and torque) is changed, for example, the torque is changed, and the exhaust gas temperature is calculated as above on the basis of a map including the torque change. Alternatively, the exhaust gas may be recirculated through the EGR passage to change the oxygen concentration for promoting the conversion of HC.

With the aforementioned regeneration system, it is possible to have a temperature for regeneration of the honeycomb structure, that is, a sufficient temperature to remove, by burning, particulates deposited on the honeycomb structure.

According to the present invention, the honeycomb structure used as an exhaust gas purification filter is formed from a composite material comprising ceramic particles and crystalline silicon particles. For this composite material, the optimum temperature for sufficient removal, by burning, of particulates captured by the filter is within a range of 250 to 800 °C.

If the temperature of regeneration is more than 800°C, the silicon surface will become easy to oxidize, the reactivity of the silicon particles with oxygen will be very high, and the silicon bonding the ceramic particles together will melt and fill the gap (pore) between the ceramic particles, resulting in an increased pressure loss. Also, any temperature less than 250°C is insufficient for removal of the particulates by burning. It is not effective for regeneration of the filter, and also results in a greater loss of pressure.

It was also found through the experiments by the Inventors of the present invention that the temperature ranging from 250 to 800 °C could assure a highest reactivity of the catalyst supported on the honeycomb structure.

### Example 1:

(1) A crude paste was prepared by wet blending of 80 percent by mass of α-type silicon carbide powder of 30 µm in mean particle size and 20 percent by mass of crystalline silicon powder (whose half-width of silicon peak (2θ = about 28°) observed by the X-ray diffraction is 0.6°) of 4 µm in mean particle size to provide a powder mixture, and then adding 6 parts by weight of an organic binder (methyl cellulose), 2.5 parts by weight of a surface active agent (oleic acid) and 24 parts by weight of water to 100 parts by weight of the powder mixture.
   Next, the crude paste was put in an extrusion molding machine and formed at an extrusion rate of 10 cm/min into a green molding having the generally same shape as the porous ceramic member 20 shown in FIG. 2.
   The green molding was dried by a microwave dryer to provide a dry ceramic molding. Then, a paste-like sealing material having the similar composition to that of the green molding was filled into ends of selected cells. Thereafter, the dry ceramic molding was further dried by the dryer, and degreased at 550°C for 3 hours in an oxidizing atmosphere to provide a degreased ceramic molding.
   The degreased ceramic molding was heated at 1,400°C for 2 hours in an atmosphere of argon to melt the single crystal silicon for bonding the silicon carbide particles together.
   Thereafter, the degreased ceramic molding processed as above was baked at 2,150°C for 2 hours in the argon atmosphere at normal pressures to provide a porous ceramic member having a porosity of 45%, mean pore diameter of 10 µm and dimensions of 34.3 x 34.3 × 254 mm.
(2) A cylindrical ceramic block of 144 mm in diameter was prepared by binding a plurality of the porous ceramic members together by a heat-resistance sealing paste comprising 30 percent by mass of alumina fibers of 0.2 mm in length, 21 percent by mass of silicon carbide powder of 0.6 µm in mean particle size, 15 percent by mass of silica sol, 5.6 percent by mass of carboxymethyl cellulose and 28.4 percent by mass of water, and then cutting the bundle of the porous ceramic members using a diamond cutter.

The thickness of the sealing layer binding the porous ceramic members was adjusted to 1.0 mm.

Next, a sealing paste was prepared by mixing and kneading 23.3 percent by mass of ceramic fibers (3% in shot content, 0.1 to 100 mm in length) as inorganic fibers, 30.2 percent by mass of silicon carbide powder of 0.3 µm in mean particle size as inorganic particles, 7 percent by mass of silica sol (SiO₂ content in 30 percent by mass) as inorganic binder, 0.5 percent by mass of carboxymethyl cellulose as organic binder and 39 percent by mass of water.

The sealing paste was applied over the outer surface of the ceramic block to a thickness of 1.0 mm. Then, the sealing layer was dried at 120°C to provide a cylindrical honeycomb structure. An exhaust gas purifying apparatus as shown in FIG. 4 was built using this honeycomb structure as a filter (Sample 1).

### Example 2:

(1) A porous ceramic member was prepared as in the step (1) for preparation of the above Example 1 except that after bonding the silicon carbide particles together by the single crystal silicon, the baking was made at 2,200°C for 2 hours.
(2) A honeycomb structure was formed using the above porous ceramic members together as in the step (2) for preparation of the Example 1, and the exhaust gas purifying apparatus as shown in FIG. 4 was built using the honeycomb structure as a filter (Sample 2).

### Example 3:

(1) A porous ceramic member was prepared as in the step (1) for preparation of the above Example 1 except that after bonding the silicon carbide particles together by the single crystal silicon, the baking was made at 2,200°C for 3 hours.
(2) A honeycomb structure was formed using the above porous ceramic members together as in the step (2) for preparation of the Example 1, and the exhaust gas purifying apparatus as shown in FIG. 4 was built using the honeycomb structure as a filter (Sample 3).

### Example 4:

(1) A degreased ceramic molding was prepared as in the step (1) for preparation of the above Example 1 except that metallic silicon (of 0.9° in half-width of silicon peak) was used in place of the single crystal silicon, and the degreased ceramic molding was heated at 1,600°C for 3 hours to melt the metallic silicon powder for bonding the silicon carbide particles together to provide a porous ceramic member.
(2) A honeycomb structure was formed using the above porous ceramic member together as in the step (2) for preparation of the Example 1, and the exhaust gas purifying apparatus as shown in FIG. 4 was built using the honeycomb structure as a filter (Sample 4).

### Example 5:

(1) A porous ceramic member was prepared as in the step (1) for preparation of the above Example 1 except that after bonding the silicon carbide particles together by the single crystal silicon, the baking was made at 2,250°C for 3 hours.
(2) A honeycomb structure was formed using the above porous ceramic member as in the step (2) for preparation of the Example 1, and the exhaust gas purifying apparatus as shown in FIG. 4 was built using the honeycomb structure as a filter (Sample 5).

### Example 6:

(1) A crude paste was prepared by wet blending of 80 percent by mass of alumina powder of 30 µm in mean particle size and 20 percent by mass of single crystal silicon powder (whose half-width of silicon peak is 0.6°) of 4 µm in mean particle size to provide a powder mixture, and then adding 6 parts by weight of an organic binder (methyl cellulose), 2.5 parts by weight of a surface active agent (oleic acid) and 24 parts by weight of water to 100 parts by weight of the powder mixture.
   Next, the crude paste was filled in an extrusion molding machine and formed at an extrusion rate of 10 cm/min into a green molding having the generally same shape as the porous ceramic member 30 shown in FIG. 3.
   The green molding was dried by a microwave dryer to provide a dry ceramic molding. Then, a paste-like sealing material having the similar composition to that of the green molding was filled into ends of selected cells. Thereafter, the dry ceramic molding was further dried by the dryer, and degreased at 550°C for 3 hours in an oxidizing atmosphere to provide a degreased ceramic molding.
   The degreased ceramic molding was heated at 1,400°C for 2 hours in an atmosphere of argon to melt the single crystal silicon for bonding the alumina particles together.
   Thereafter, the degreased ceramic molding processed as above was baked at 2,000°C for 1 hour in the argon atmosphere at normal pressures to provide a porous ceramic member (honeycomb structure) having a porosity of 45%, mean pore diameter of 10 µm, a diameter of 144 mm and length of 254 mm.
(2) The exhaust gas purifying apparatus as shown in FIG. 4 was built using the honeycomb structure was used as a filter (Sample 6).

### Example 7:

(1) A porous ceramic member (honeycomb structure) was prepared as in the step (1) for preparation of the above Example 6 except that after bonding the alumina particles together by the single crystal silicon, the baking was made at 2,010°C for 2 hours.
(2) The exhaust gas purifying apparatus as shown in FIG. 4 was built using the honeycomb structure as a filter (Sample 7).

### Example 8:

(1) A porous ceramic member (honeycomb structure) was prepared as in the step (1) for preparation of the above Example 6 except that after bonding the alumina particles together by the single crystal silicon, the baking was made at 2,040°C for 2 hours.
(2) The exhaust gas purifying apparatus as shown in FIG. 4 was built using the honeycomb structure as a filter (Sample 8).

### Example 9:

(1) A degreased ceramic molding was prepared as in the step (1) for preparation of the above Example 6 except that metallic silicon (of 0.9° in half-width of silicon peak) was used in place of the single crystal silicon. A porous alumina member (honeycomb structure) was prepared as in the step (2) for preparation of the above Example 6 except that the degreased ceramic molding was heated at 1,600°C for 3 hours to melt the metallic silicon powder for bonding the alumina particles together.
(2) The exhaust gas purifying apparatus as shown in FIG. 4 was built using the honeycomb structure as a filter (Sample 9).

### Example 10:

(1) A porous alumina member (honeycomb structure) was prepared as in preparation of the above Example 6 except that after bonding the alumina particles together by the single crystal silicon, the baking was made at 2,040°C for 3 hours.
(2) The exhaust gas purifying apparatus as shown in FIG. 4 was built using the honeycomb structure as a filter (Sample 10).

### Comparative Example 1:

(1) A crude paste was prepared by wet blending of 80 percent by mass of
   α-type silicon carbide powder of 30 µm in mean particle size and 20 percent by mass of α-type silicon carbide powder of 0.8 µm in mean particle size to provide a powder mixture, and then adding 6 parts by weight of an organic binder (methyl cellulose), 2.5 parts by weight of a surface active agent (oleic acid) and 24 parts by weight of water to 100 parts by weight of the powder mixture.
   Next, the crude paste was filled in an extrusion molding machine and formed at an extrusion rate of 10 cm/min into a green molding having the generally same shape as the porous ceramic member 20 shown in FIG. 2.
   The green molding was dried by a microwave dryer to provide a dry ceramic molding. Then, a paste-like sealing material having the similar composition to that of the green molding was filled into ends of selected cells. Thereafter, the dry ceramic molding was further dried by the dryer, and degreased at 550°C for 3 hours in an oxidizing atmosphere to provide a degreased ceramic molding.
   Thereafter, the degreased ceramic molding processed as above was baked at 2,150°C for 2 hours in the argon atmosphere at normal pressures to provide a porous ceramic member (honeycomb structure) having a porosity of 45%, mean pore diameter of 10 µm, and dimensions of 34.3 x 34.3 x 254 mm.
(2) The porous ceramic member was used to prepare a honeycomb structure as in the step (2) for preparation of the Example 1, and the exhaust gas purifying apparatus as shown in FIG. 4 was built using the honeycomb structure as a filter (Sample 11).

### Comparative Example 2:

(1) A crude paste was prepared by wet blending of 80 percent by mass of alumina powder of 30 µm in mean particle size and silica sol to provide a powder mixture having 20 percent by mass of a solid for silica , and then adding 6 parts by weight of an organic binder (methyl cellulose), 2.5 parts by weight of a surface active agent (oleic acid) and 24 parts by weight of water to 100 parts by weight of the powder mixture.
   Next, the crude paste was filled in an extrusion molding machine and formed at an extrusion rate of 10 cm/min into a green molding having the generally same shape as the porous ceramic member 30 shown in FIG. 3.
   The green molding was dried by a microwave dryer to provide a dry ceramic molding. Then, a paste-like sealing material having the similar composition to that of the green molding was filled into ends of selected cells. Thereafter, the dry ceramic molding was further dried by the dryer, and degreased at 550°C for 3 hours in an oxidizing atmosphere to provide a degreased ceramic molding.
   Thereafter, the degreased ceramic molding processed as above was baked at 2,040°C for 3 hours in the argon atmosphere at normal pressures to provide a cylindrical porous ceramic member (honeycomb structure) having a porosity of 45%, mean pore diameter of 10 µm, a diameter of 144 mm and a length of 254 mm.
(2) The exhaust gas purifying apparatus as shown in FIG. 4 was built using the honeycomb structure as a filter (Sample 12).

### Evaluation tests:

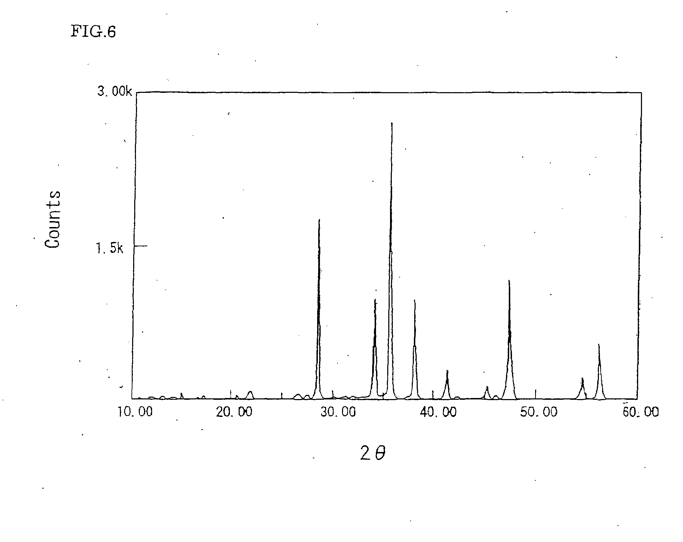

The honeycomb structures (samples 1 to 12) used in the exhaust gas purifying apparatuses having been described in the Examples 1 to 10 and Comparative Examples 1 and 2 were subjected to the following evaluation tests (A) and (B):
(A) Evaluation test on the crystallinity of the silicon which bonds the ceramic particles together
There were measured the half-width of silicon peak (2θ = about 28°), observed by the X-ray diffraction, of the honeycomb structures (samples 1 to 12). The results are shown in Table 1.
In addition, the actual measurement result of sample 1 is shown in Fig. 6.

**Table 1**

| | Compositi on of composite material | Shape of ceramic block | Half-width (°) of Si as crude material | Baking temperatu re (°C) | Length of heating time (hrs) | Half-width (°) of bake ceramic molding |
|---|---|---|---|---|---|---|
| Sample 1 | SiC + Si | FIG. 2 | 0.6 | 2150 | 2 | 0.6 |
| Sample 2 | SiC + Si | FIG. 2 | 0.6 | 2200 | 2 | 0.3 |
| Sample 3 | SiC + Si | FIG. 2 | 0.6 | 2200 | 3 | 0.1 |
| Sample 4 | SiC + Si | FIG. 2 | 0.9 | 1600 | 3 | 0.75 |
| Sample 5 | SiC + Si | FIG. 2 | 0.6 | 2250 | 3 | 0.05 |
| Sample 6 | Alumina + Si | FIG. 3 | 0.6 | 2000 | 1 | 0.6 |
| Sample 7 | Alumina + Si | FIG. 3 | 0.6 | 2010 | 2 | 0.3 |
| Sample 8 | Alumina + Si | FIG. 3 | 0.6 | 2040 | 2 | 0.1 |
| Sample 9 | Alumina + Si | FIG. 3 | 0.9 | 1600 | 3 | 0.75 |
| Sample 10 | Alumina + Si | FIG. 3 | 0.6 | 2040 | 3 | 0.05 |
| Sample 11 | SiC | FIG. 2 | - | 2250 | 3 | - |
| Sample 12 | Alumina | FIG. 3 | - | 1600 | 3 | - |

The X-ray diffractometer used in these tests is RIGAKU RINT-2500 by Rigaku Denki. The light source used for the X-ray diffraction was CuKα1. First, a sample was crushed and homogenized, and filled in a glass-made sample holder. The sample holder filled with the sample was set in a sample stage of a goniometer. Then, with coolant being supplied to an X-ray tube, the X-ray diffractometer was switched on, The voltage was set to 40 kV and current was set to 30 mA. Thereafter, a measurement was made with X-ray diffraction conditions set as follow:

| | |
|---|---|
| Divergence slit | 0.5° |
| Divergence longitudinal-limiting slit | 10 mm |
| Scattering slit | 0.5° |
| Light-acceptance slit | 0.3 mm |
| Monochromatic light-acceptance slit | 0.8 mm |
| Mode of operation | Continuous |
| Moving speed | 5.000°/min |
| Step | 0.01° |
| Scanning range | 10.000° to 60.000° |
| Monochrometer | Counter monochrometer |
| Optical system | Concentrated type |

(B) Test on regeneration of the exhaust gas purifying apparatus

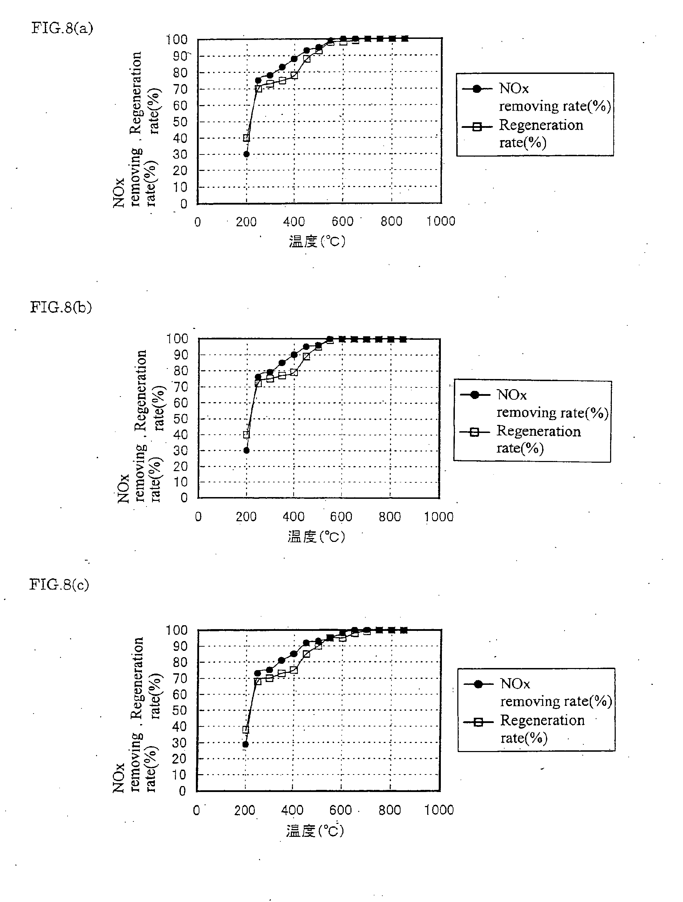

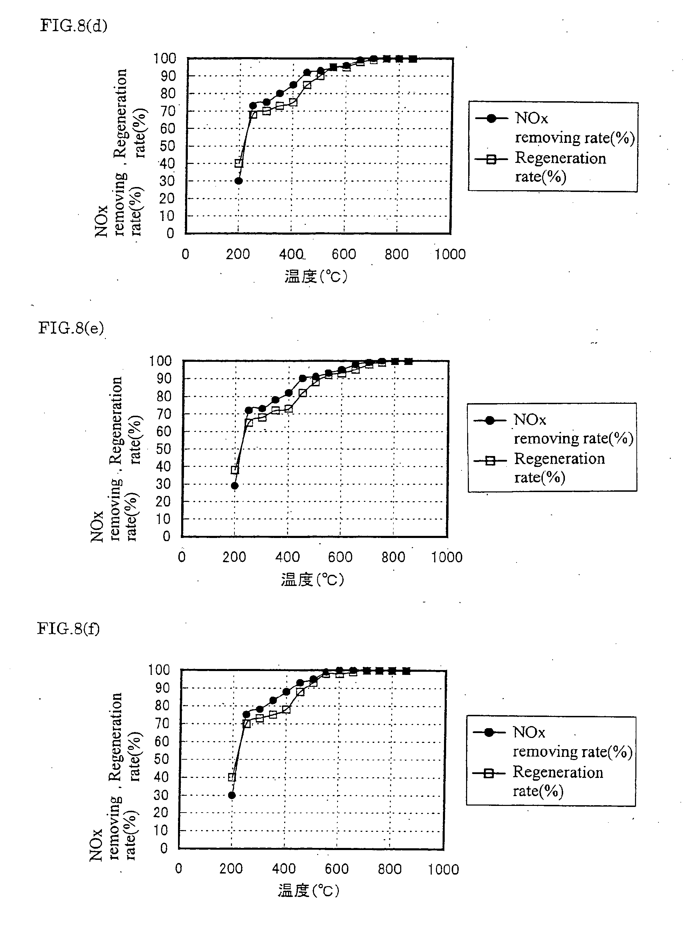

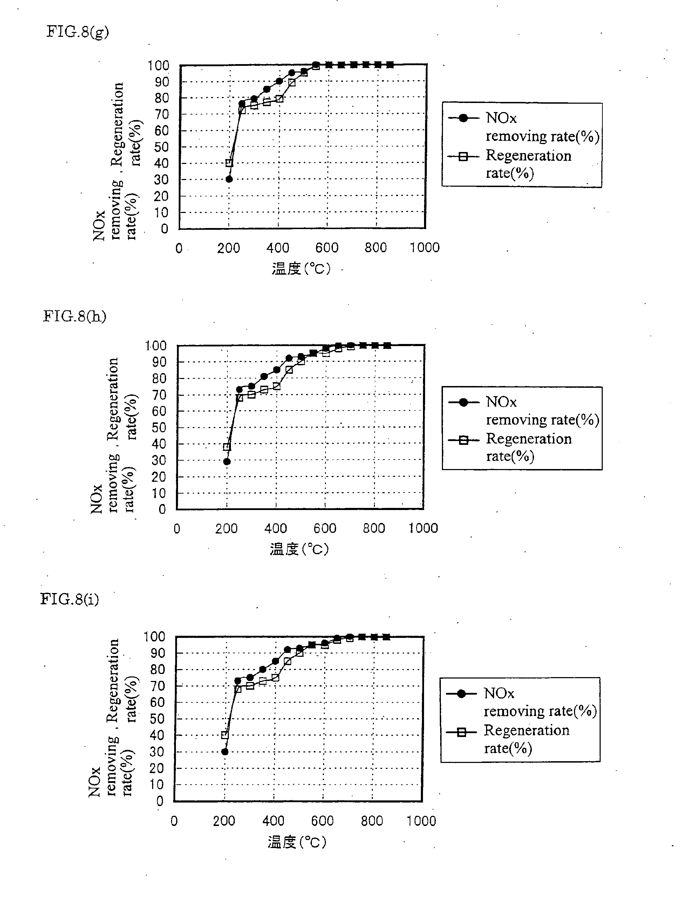

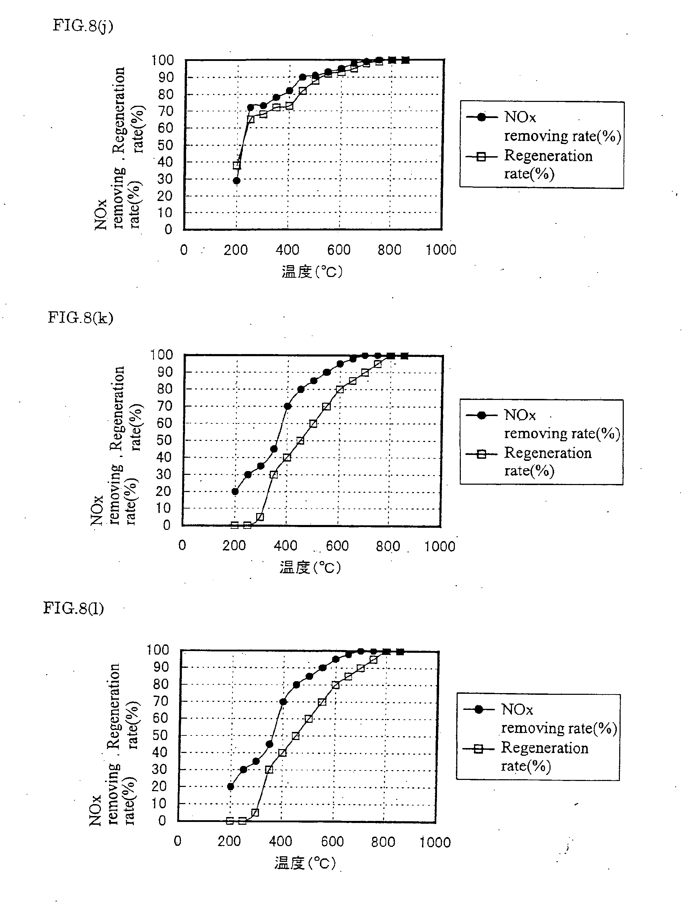

The honeycomb structures as the Samples 1 to 12 were used as honeycomb filters in the exhaust gas purifying apparatuses. A heat cycle test in which capture of particulates and regeneration were repeatedly done was done under the following conditions, and the pressure loss was measured after completion of the heat cycle test, and cracking was visually checked.
(1) First, crushed γ-alumina was put in an organic solvent to provide a slurry, and 10 g/L of the slurry was supported on each honeycomb structure as a sample. Next, 2 g/L of platinum (Pt) was supported on the honeycomb structure.
(2) Next, each honeycomb structure as a sample was installed in the exhaust gas purifying apparatus shown in FIG. 5. With the engine being driven at a revolution speed of 3,000 rpm and torque of 50 Nm for a predetermined length of time, particulates in the exhaust gas from the engine were captured in an amount of 7 g/L. It should be noted that the captured amount was checked by weighing the honeycomb structure before and after the capturing.
(3) Then, with the system shown in FIG. 5 being changed to the post-injection type to monitor the regenerating conditions for the honeycomb filters in the Examples 1 to 10 and Comparative Examples 1 and 2, the length of regeneration time was adjusted in an operating program mode in which the exhaust gas concentration and temperature were adjusted, and the samples were subjected to regeneration. The exhaust gas purified by this system was analyzed using an exhaust gas analyzer (Motor Exhaust Gas Analyzer MEXA-7500D by the Horiba Seisakusho). A simulated gas was prepared based on the results of analysis.
This method of gas analysis were in compliance with the Standards JIS B 7982:2002 (Automatic Measurement System and Automatic Measurement Apparatus for Nitrogen Oxide in Exhaust Gas), JIS K 0104: 2000 (Method of Analysis for Nitrogen Oxide in Exhaust Gas), etc.
As the simulated gas used in the regeneration test, nitrogen gas was mixed in plant air to have an O₂ concentration of 13 volume percent, and the gas was continuously supplied at a rate of 130 L/min.
A gas containing 6,540 ppm of C₃H₆ in ppm, 5,000 ppm of CO, 160 ppm of NO, 8 ppm of SO₂, 0.038% of CO₂, 10% of H₂O and 10% of O₂ was mixed in the simulated gas. For this mixing, a gas mixer was used whine being heated by a heater, whereby the temperature of the exhaust gas could freely be set.
The results of regeneration test on the honeycomb structures as the samples 1 to 12 are shown in Tables 2a to 21 and Figs. 8(a)-8(1).

**Table 2a Sample 1 (SiC + Si: half-width of 0.6°)**

| Exhaust gas temp. (°C) | Ability of NOx removal | Regeneration rate (%) | Observation by SEM after repeating regeneration 100 times |
|---|---|---|---|
| 200 | 30 | 40 | No change found |
| 250 | 75 | 70 | No change found |
| 300 | 78 | 73 | No change found |
| 350 | 83 | 75 | No change found |
| 400 | 88 | 78 | No change found |
| 450 | 93 | 88 | No change found |
| 500 | 95 | 93 | No change found |
| 550 | 99 | 98 | No change found |
| 600 | 100 | 98 | No change found |
| 650 | 100 | 99 | No change found |
| 700 | 100 | 100 | No change found |
| 750 | 100 | 100 | No change found |
| 800 | 100 | 100 | No change found |
| 850 | 100 | 100 | Change found |

**Table 2b Sample 2 (SiC + Si: half-width of 0.3°)**

| Exhaust gas temp. (°C) | Ability of NOx removal | Regeneration rate (%) | Observation by SEM after repeating regeneration 100 times |
|---|---|---|---|
| 200 | 30 | 40 | No change found |
| 250 | 76 | 72 | No change found |
| 300 | 79 | 75 | No change found |
| 350 | 85 | 77 | No change found |
| 400 | 90 | 79 | No change found |
| 450 | 95 | 89 | No change found |
| 500 | 96 | 95 | No change found |
| 550 | 100 | 99 | No change found |
| 600 | 100 | 100 | No change found |
| 650 | 100 | 100 | No change found |
| 700 | 100 | 100 | No change found |
| 750 | 100 | 100 | No change found |
| 800 | 100 | 100 | No change found |
| 850 | 100 | 100 | Change found |

**Table 2c Sample 3 (SiC + Si: half-width of 0.1°)**

| Exhaust gas temp. (°C) | Ability of NOx removal | Regeneration rate (%) | Observation by SEM after repeating regeneration 100 times |
|---|---|---|---|
| 200 | 29 | 38 | No change found |
| 250 | 73 | 68 | No change found |
| 300 | 75 | 70 | No change found |
| 350 | 81 | 73 | No change found |
| 400 | 85 | 75 | No change found |
| 450 | 92 | 85 | No change found |
| 500 | 93 | 90 | No change found |
| S50 | 95 | 95 | No change found |
| 600 | 98 | 95 | No change found |
| 650 | 100 | 98 | No change found |
| 700 | 100 | 99 | No change found |
| 750 | 100 | 100 | No change found |
| 800 | 100 | 100 | No change found |
| 850 | 100 | 100 | Change found |

**Table 2d Sample 4 (SiC + Si: half-width of 0.75°)**

| Exhaust gas temp. (°C) | Ability of NOx removal | Regeneration rate (%) | Observation by SEM after repeating regeneration 100 times |
|---|---|---|---|
| 200 | 30 | 40 | No change found |
| 250 | 73 | 68 | No change found |
| 300 | 75 | 70 | No change found |
| 350 | 80 | 73 | No change found |
| 400 | 85 | 75 | No change found |
| 450 | 92 | 85 | No change found |
| 500 | 93 | 90 | No change found |
| 550 | 95 | 95 | No change found |
| 600 | 96 | 95 | No change found |
| 650 | 99 | 98 | No change found |
| 700 | 100 | 99 | No change found |
| 750 | 100 | 100 | No change found |
| 800 | 100 | 100 | No change found |
| 850 | 100 | 100 | Change found |

**Table 2e Sample 5 (SiC + Si: half-width of 0.05°)**

| Exhaust gas temp. (°C) | Ability of NOx removal | Regeneration rate (%) | Observation by SEM after repeating regeneration 100 times |
|---|---|---|---|
| 200 | 29 | 38 | No change found |
| 250 | 72 | 65 | No change found |
| 300 | 73 | 68 | No change found |
| 350 | 78 | 72 | No change found |
| 400 | 82 | 73 | No change found |
| 450 | 90 | 82 | No change found |
| 500 | 91 | 88 | No change found |
| 550 | 93 | 92 | No change found |
| 600 | 95 | 93 | No change found |
| 650 | 98 | 95 | No change found |
| 700 | 99 | 98 | No change found |
| 750 | 100 | 99 | No change found |
| 800 | 100 | 100 | No change found |
| 850 | 100 | 100 | Change found |

**Table 2f Sample 6 (Alumina + Si: half-width of 0.6°)**

| Exhaust gas temp. (°C) | Ability of NOx removal | Regeneration rate (%) | Observation by SEM after repeating regeneration 100 times |
|---|---|---|---|
| 200 | 30 | 40 | No change found |
| 250 | 75 | 70 | No change found |
| 300 | 78 | 73 | No change found |
| 350 | 83 | 75 | No change found |
| 400 | 88 | 78 | No change found |
| 450 | 93 | 88 | No change found |
| 500 | 95 | 93 | No change found |
| 550 | 99 | 98 | No change found |
| 600 | 100 | 98 | No change found |
| 650 | 100 | 99 | No change found |
| 700 | 100 | 100 | No change found |
| 750 | 100 | 100 | No change found |
| 800 | 100 | 100 | No change found |
| 850 | 100 | 100 | Change found |

**Table 2g Sample 7 (Alumina + Si: half-width of 0.3°)**

| Exhaust gas temp. (°C) | Ability of NOx removal | Regeneration rate (%) | Observation by SEM after repeating regeneration 100 times |
|---|---|---|---|
| 200 | 30 | 40 | No change found |
| 250 | 76 | 72 | No change found |
| 300 | 79 | 75 | No change found |
| 350 | 85 | 77 | No change found |
| 400 | 90 | 79 | No change found |
| 450 | 95 | 89 | No change found |
| 500 | 96 | 95 | No change found |
| 550 | 100 | 99 | No change found |
| 600 | 100 | 100 | No change found |
| 650 | 100 | 100 | No change found |
| 700 | 100 | 100 | No change found |
| 750 | 100 | 100 | No change found |
| 800 | 100 | 100 | No change found |
| 850 | 100 | 100 | Change found |

**Table 2h Sample 8 (Alumina + Si: half-width of 0.1 °)**

| Exhaust gas temp. (°C) | Ability of NOx removal | Regeneration rate (%) | Observation by SEM after repeating regeneration 100 times |
|---|---|---|---|
| 200 | 29 | 38 | No change found |
| 250 | 73 | 68 | No change found |
| 300 | 75 | 70 | No change found |
| 350 | 81 | 73 | No change found |
| 400 | 85 | 75 | No change found |
| 450 | 92 | 85 | No change found |
| 500 | 93 | 90 | No change found |
| 550 | 95 | 95 | No change found |
| 600 | 98 | 95 | No change found |
| 650 | 100 | 98 | No change found |
| 700 | 100 | 99 | No change found |
| 750 | 100 | 100 | No change found |
| 800 | 100 | 100 | No change found |
| 850 | 100 | 100 | Change found |

**Table 2i Sample 9 (Alumina + Si: half-width of 0.75°)**

| Exhaust gas temp. (°C) | Ability of NOx removal | Regeneration rate (%) | Observation by SEM after repeating regeneration 100 times |
|---|---|---|---|
| 200 | 30 | 40 | No change found |
| 250 | 73 | 68 | No change found |
| 300 | 75 | 70 | No change found |
| 350 | 80 | 73 | No change found |
| 400 | 85 | 75 | No change found |
| 450 | 92 | 85 | No change found |
| 500 | 93 | 90 | No change found |
| 550 | 95 | 95 | No change found |
| 600 | 96 | 95 | No change found |
| 650 | 99 | 98 | No change found |
| 700 | 100 | 99 | No change found |
| 750 | 100 | 100 | No change found |
| 800 | 100 | 100 | No change found |
| 850 | 100 | 100 | Change found |

**Table 2j Sample 10 (Alumina + Si: half-width of 0.05°)**

| Exhaust gas temp. (°C) | Ability of NOx removal | Regeneration rate (%) | Observation by SEM after repeating regeneration 100 times |
|---|---|---|---|
| 200 | 29 | 38 | No change found |
| 250 | 72 | 65 | No change found |
| 300 | 73 | 68 | No change found |
| 350 | 78 | 72 | No change found |
| 400 | 82 | 73 | No change found |
| 450 | 90 | 82 | No change found |
| 500 | 91 | 88 | No change found |
| 550 | 93 | 92 | No change found |
| 600 | 95 | 93 | No change found |
| 650 | 98 | 95 | No change found |
| 700 | 99 | 98 | No change found |
| 750 | 100 | 99 | No change found |
| 800 | 100 | 100 | No change found |
| 850 | 100 | 100 | Change found |

**Table 2k Sample 11 (SiC)**

| Exhaust gas temp. (°C) | Ability of NOx removal | Regeneration rate (%) | Observation by SEM after repeating regeneration 100 times |
|---|---|---|---|
| 200 | 20 | 0 | No change found |
| 250 | 30 | 0 | No change found |
| 300 | 35 | 5 | No change found |
| 350 | 45 | 30 | No change found |
| 400 | 70 | 40 | No change found |
| 450 | 80 | 50 | No change found |
| 500 | 85 | 60 | No change found |
| 550 | 90 | 70 | No change found |
| 600 | 95 | 80 | No change found |
| 650 | 98 | 85 | No change found |
| 700 | 100 | 90 | No change found |
| 750 | 100 | 95 | No change found |
| 800 | 100 | 100 | No change found |
| 850 | 100 | 100 | No change found |

**Table 21 Sample 12 (Alumina)**

| Exhaust gas temp. (°C) | Ability of NOx removal | Regeneration rate (%) | Observation by SEM after repeating regeneration 100 times |
|---|---|---|---|
| 200 | 20 | 0 | No change found |
| 250 | 30 | 0 | No change found |
| 300 | 35 | 5 | No change found |
| 350 | 45 | 30 | No change found |
| 400 | 70 | 40 | No change found |
| 450 | 80 | 50 | No change found |
| 500 | 85 | 60 | No change found |
| 550 | 90 | 70 | No change found |
| 600 | 95 | 80 | No change found |
| 650 | 98 | 85 | No change found |
| 700 | 100 | 90 | No change found |
| 750 | 100 | 95 | No change found |
| 800 | 100 | 100 | No change found |
| 850 | 100 | 100 | No change found |

Note that the "Ability of NOx removal" was determined based on the results of analysis of NOx before and after the filter (by the analyzer by the Horiba Seisakusho, more particularly, by the chemiluminescence analysis).
Also, the result of oxidation of particulates was calculated by an equation (regeneration rate = (burnt amount of particulates)/(captured amount of particulates) x 100) based on the change in weight after the aforementioned regeneration test.
The results show that the filters in the Examples 1 to 10, formed from a composite material comprising ceramics and silicon, have a high performance of removing NOx and the performance of purification was 70% or more at a temperature of 250°C or more of the exhaust gas, and 90% or more at a temperature of 500°C or more of the exhaust gas.
Also, the "Regeneration rate" was 70% or more at a temperature of 250°C or more. In addition, it was 90% or more at a temperature of 500°C or more.
Note that by SEM observation, made after the test, of a slice sampled from the central portion of each of the filters regenerated at a temperature of 850°C or more, it was found that the filter formed from the composite material comprising the ceramics and silicon was melted at the surface thereof and the pores were clogged with the melted silicon.
The above shows that the filter is desirably regenerated at a temperature ranging from 250 to 800 °C.
(4) Each of the Samples 1 to 12 including the Examples 1 to 10 and Comparative Examples 1 and 2 was subjected to a heat cycle test in which the capture of particulates and filter regeneration specified in (1) to (3) above were repeated 100 times.

After completion of each heat cycle test, the filter was visually checked for any cracking. All the honeycomb filters were found free from any cracking. Also, each sample was heated at a temperature of 800°C or less for regeneration thereof. As the result, the initial pressure loss after the heat cycle test was found almost unchanged from that before the heat cycle test.

Further, no cracking was found in the honeycomb filter regenerated at a relatively high temperature more than 800°C, but a large pressure loss was found. The honeycomb filters were also subjected to regeneration at a temperature less than 250°C, but such a temperature was found too low to assure any high regeneration rate.

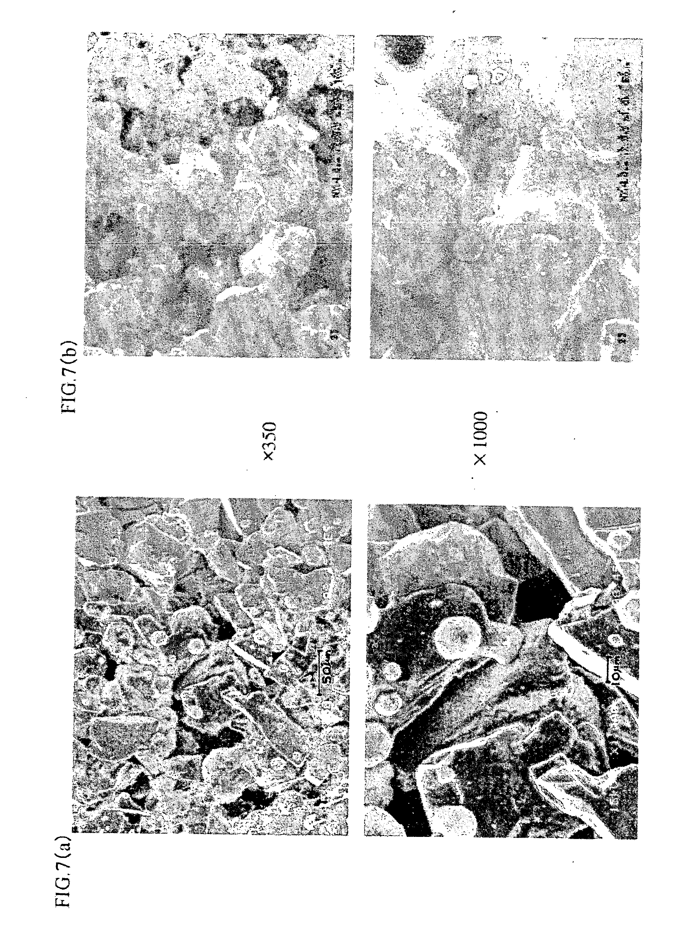

After having repeated the heat cycle test 100 times, a slice was sampled from the central portion of each honeycomb filter, and the surface of the slice was observed with powers of 350X and 1,000X using an SEM (scanning electron microscope). The SEM pictures taken of the Sample 1 are shown in FIG. 7(a) (honeycomb filter regenerated at 500°C) and FIG. 7(b) (honeycomb filter regenerated at 850°C).

As seen from these SEM pictures, many pores are found between the ceramic particles bonded together by the silicon in the honeycomb filter regenerated at about 500°C. In the honeycomb filter regenerated at 850°C, however, only a small number of pores is found between the ceramic particles.

On this account, the sample 11 (Comparative Example 1) was subjected to a qualitative analysis by the EDS (energy dispersive X-ray analysis). The results of the qualitative analysis showed that the ratio of the silicon in the sample 11 was high. That is, it is considered that in the honeycomb filter as the Comparative Example 1, the portions between the ceramic particles were clogged with the melted silicon, resulting in an increased pressure loss.

As will be known from the foregoing description, in an example in which the honeycomb filter is formed from a composite material comprising ceramic particles and silicon, the pores between the ceramic particles will not be clogged with melted silicon when the honeycomb filter is regenerated at a temperature lower than or equal to 800°C, so that the pressure loss will be small. Especially, it was found that the pressure loss will scarcely be large when the honeycomb filter is regenerated at a temperature ranging from 500 to 700 °C.

### Industrial Applicability

As having been described in the foregoing, the exhaust gas purifying apparatus uses a honeycomb structure, as an exhaust gas purifying filter, formed from a composite material comprising ceramic particles and crystalline silicon and which is to be regenerated at a temperature of 250 to 800 °C. The honeycomb structure is excellent in thermal diffusion and hardly stores thermal stress even after a temperature distribution takes place and heat cycle is repeated. Thus, the honeycomb structure is excellent in thermal shock resistance.

In the exhaust gas purifying apparatus according to the present invention, the honeycomb structure having provided on each cell wall thereof a catalyst made from a precious metal such as Pt, Rh, Pd or the like or an alloy of them can be used as a purifying filter to convert HC, CO, NOx and the like in the exhaust gas from a heat engine such as an internal combustion engine, combustion engine such as a boiler, etc. and as a catalyst carrier to modify liquid fuel or gas fuel.

## Claims

1. An exhaust gas purifying apparatus using a honeycomb structure which is to be disposed in an exhaust passage of an internal combustion engine and which functions as a filter to capture particulates in exhaust gas and as a catalyst to convert the exhaust gas, wherein:
the honeycomb structure is formed from a composite material comprising ceramic particles and crystalline silicon and is to be regenerated by heating at a temperature ranging from 250 to 800°C.

2. The apparatus according to claim 1, wherein the crystalline silicon in the composite material has a high crystallinity.

3. The apparatus according to claim 1, wherein the crystalline silicon in the composite material is a high-crystallinity one whose half-width of silicon peak (2θ = about 28°) observed by the X-ray diffraction is 0.6° or less.

4. The apparatus according to claim 1, wherein the honeycomb structure includes a pillar-shaped porous honeycomb ceramic member formed from a plurality of cells arranged longitudinally, isolated from each other by a cell wall laid between adjacent ones of the cells, sealed at one end thereof, and each providing a gas passage, or a plurality of such pillar-shaped porous honeycomb ceramic members bound together in combination, the honeycomb structure having thus a filtering function.

5. The apparatus according to claim 1, wherein the honeycomb structure includes a pillar-shaped porous honeycomb ceramic member formed from a plurality of cells arranged longitudinally, isolated from each other by a cell wall laid between adjacent ones of the cells, sealed at one end thereof, and each providing a gas passage, or a plurality of such pillar-shaped porous honeycomb ceramic members bound together in combination, the cell wall being formed to support on the surface thereof a catalyst made from a precious metal such as Pt, Rh, Pd or the like or an alloy of them.

6. The apparatus according to claim 1, wherein the ceramic particles are of silicon carbide.

7. The apparatus according to claim 4, wherein a catalyst made from a precious metal or its alloy is supported on the cell wall of the honeycomb structure.

8. A method of regenerating an exhaust gas purifying apparatus using a honeycomb structure which is to be disposed in an exhaust passage of an internal combustion engine and functions as a filter to capture particulates in exhaust gas and as a catalyst to convert the exhaust gas, the honeycomb structure being formed from a composite material comprising ceramic particles and crystalline silicon, wherein:
the exhaust gas purifying apparatus is regenerated by heating the particulates etc. captured by the honeycomb structure at a temperature ranging from 250 to 800°C by a filter regenerating means including a heating means provided for the apparatus.

9. A method of regenerating an exhaust gas purifying apparatus using a honeycomb structure which is to be disposed in an exhaust passage of an internal combustion engine and functions as a filter to capture particulates in exhaust gas and as a catalyst to convert the exhaust gas, the honeycomb structure being formed from a composite material comprising ceramic particles and crystalline silicon, wherein:
the exhaust gas purifying apparatus is regenerated by heating the particulates etc. captured by the honeycomb structure at a temperature ranging from 250 to 800°C by the heat of the exhaust gas itself.

10. The method according to claim 8 or 9, wherein the particulates are heated at a temperature of 500 to 800 °C.

11. The method according to claim 8 or 9, wherein the crystalline silicon in the composite material has a high crystallinity.

12. The method according to claim 11, wherein the crystalline silicon in the composite material is a high-crystallinity one whose half-width of silicon peak (2θ = about 28°) observed by the X-ray diffraction is 0.6° or less.

13. The method according to claim 8 or 9, wherein the honeycomb structure includes a pillar-shaped porous honeycomb ceramic member formed from a plurality of cells arranged longitudinally, isolated from each other by a cell wall laid between adjacent ones of the cells, sealed at one end thereof, and each providing a gas passage, or a plurality of such pillar-shaped porous honeycomb ceramic members bound together in combination, the honeycomb structure having thus a filtering function.

14. The method according to claim 8 or 9, wherein the honeycomb structure includes a pillar-shaped porous honeycomb ceramic member formed from a plurality of cells arranged longitudinally, isolated from each other by a cell wall laid between adjacent ones of the cells, sealed at one end thereof, and each providing a gas passage, or a plurality of such pillar-shaped porous honeycomb ceramic members bound together in combination, the cell was being formed to support on the surface thereof a catalyst made from a precious metal such as Pt, Rh, Pd or the like or an alloy of them.

15. The method according to claim 13, wherein a catalyst made from a precious metal or its alloy is supported on the cell wall of the honeycomb structure.

16. The method according to claim 8 or 9, wherein the ceramic particles are of silicon carbide.
